(19) Europäisches Patentamt
European Patent Office
Office européen des brevets

(11) Publication number: **0 073 245**
**B1**

(12) **EUROPEAN PATENT SPECIFICATION**

(45) Date of publication of patent specification: **09.01.85**

(21) Application number: **82901195.6**

(22) Date of filing: **02.03.82**

(86) International application number: **PCT/US82/00251**

(87) International publication number: **WO 82/03131 16.09.82 Gazette 82/22**

(51) Int. Cl.⁴: **G 03 C 7/00,** G 03 C 5/54, G 03 C 1/48, G 03 C 1/40, G 03 C 1/10, G 03 C 1/06, G 03 C 1/72, G 03 C 1/30, G 03 C 1/34, G 03 C 5/24, C 08 F 28/06

(54) **CLEAVABLE POLYMERS AND PHOTOGRAPHIC PRODUCTS AND PROCESSES EMPLOYING SAME.**

(30) Priority: **02.03.81 US 238068**

(43) Date of publication of application: **09.03.83 Bulletin 83/10**

(45) Publication of the grant of the patent: **09.01.85 Bulletin 85/02**

(84) Designated Contracting States: **DE FR GB**

(56) References cited:
GB-A-1 121 418
US-A-3 311 476
US-A-3 396 030
US-A-3 443 940
US-A-3 488 327
US-A-3 713 834
US-A-3 719 489
US-A-3 721 565
US-A-3 725 231
US-A-3 728 387
US-A-3 928 312
US-A-3 936 401
US-A-4 076 529
US-A-4 098 783
US-A-4 139 379
US-A-4 157 418
US-A-4 207 109

(73) Proprietor: **POLAROID CORPORATION**
**549 Technology Square**
**Cambridge, Massachusetts 02139 (US)**

(72) Inventor: **LOCATELL, Louis, Jr.**
**7 Monroe Road**
**Wellesley Hills, MA 02181 (US)**
Inventor: **TAYLOR, Lloyd D.**
**One Maureen Road**
**Lexington, MA 02173 (US)**

(74) Representative: **Reitzner, Bruno, Dr. et al**
**Patentanwälte Dipl.-Ing. R. Splanemann Dr. B. Reitzner Tal 13**
**D-8000 München 2 (DE)**

(56) References cited:
Journal of Polymer Science, issued 1968, IWAKURA ET AL., 'Copolymerization of Isopropenyl-4,4-dialkyl-5-oxozolones with styrene, Volume 6, pages 2681-2684
Polymer Letters, issued 1969, TAYLOR ET AL. 'The Synthesis of Vinyl Peptide Monomers', Vol. 7, pages 595-603
Journal of Polymer Science, issued 1978, GRASSHOFF ET AL., 'Synthesis of Polymers Containing 1-phenyl-2-tetrazoline-5-thione Groups', Volume 16, pages 2403-2405

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 073 245 B1

Courier Press, Leamington Spa, England.

## Description

Background of the Invention

The present invention relates to novel polymers and to photographic products and processes employing these polymers.

In various photographic products and processes, it is often desired to provide within a photographic film unit, during processing, an imagewise distribution of a photographically useful moiety. For example, in color diffusion transfer photographic products, color image formation normally involves forming an imagewise distribution of an image dye-providing material which can transfer to a receptive layer wherein it is mordanted or otherwise fixed to provide a viewable color image. In certain photographic products, provision of an imagewise distribution of a photographically useful moiety is accomplished during processing by having present in the film unit a "parent" compound containing a photographically useful moiety or a precursor of such a moiety which compound can undergo cleavage in an imagewise manner to release the moiety or precursor. Imagewise cleavage of the parent compound may be accomplished by providing an imagewise distribution of a cleavage-initiating agent which effects the desired cleavage reaction. Depending on the particular parent compound and photographic process, cleavage-initiating agents which may be employed include silver ion, soluble silver complex, an oxidizing agent, e.g., an oxidized silver halide developing agent, or a reducing agent, e.g., a silver halide developing agent.

In many applications, the parent compound is substantially non-diffusible during processing and releases a substantially diffusible photographically useful moiety. The resultant differential in diffusibility between the released moiety and the parent compound can be used to advantage in a photographic image formation process. For example, in color diffusion transfer processes, a released and, therefore, diffusible image dye-providing material can be transferred to a receptive layer to provide a viewable color image while the parent compound remains in its original layer or location in the negative structure of the film unit.

A parent compound can generally be rendered non-diffusible during processing by having substituted thereon one or more immobilizing or "ballast" groups. Straight or branched long-chain alkyl radicals can be used as such immobilizing groups. Cyclic radicals, which may be substituted with straight- or branched-chain alkyl groups can also be used.

While such immobilizing groups are generally useful in imparting substantial non-diffusibility to otherwise diffusible parent compounds, certain parent compounds can diffuse to at least a minimal degree to other layers of a film unit, either during preparation or processing of the film unit, or subsequent to such processing, notwithstanding the presence of the immobilizing substituent. A decrease in the quality of the photographic image can result from such diffusion. For example, in color diffusion transfer film products wherein a parent compound comprises a colored image dye-providing moiety, non-imagewise diffusion during processing of even a minimal amount of the parent compound to a receptive layer of the film unit can adversely affect the quality of the color transfer image, particularly in highlight areas.

Unintended diffusion of the parent compound can be a particularly acute problem, especially during processing, where the parent compound comprises, as the moiety to be released therefrom, a highly soluble and diffusible moiety which renders the parent compound similarly soluble and diffusible even when substituted with one or more of the immobilizing groups described above. Thus, certain highly soluble and diffusible moieties, which might be employed to advantage in certain photographic processes, may be precluded from use as the releasable group of what is intended to be a non-diffusible parent compound.

An additional disadvantage attendant to the use of long chain alkyl radicals and cyclic radicals substituted with alkyl radicals as immobilizing groups is that they are generally hydrophobic and, as such, may adversely affect the proper functioning of other reagents in the film unit, particularly water or aqueous alkali soluble reagents intended to diffuse through layers having present such immobilizing groups.

Summary of the Invention

It is an object of the present invention to provide polymers comprising recurring units which undergo cleavage in the presence of cleavage-initiating agents capable of being provided in an imagewise distribution.

It is another object of the present invention to provide polymers comprising recurring units capable of undergoing cleavage to provide an imagewise distribution of a photographically useful moiety.

It is another object of this invention to provide photographic products and processes employing polymers capable of undergoing cleavage to provide an imagewise distribution of a photographically useful moiety.

Other objects of the invention will be apparent from the description appearing hereinafter.

The present invention relates to polymers comprising recurring units of the formula

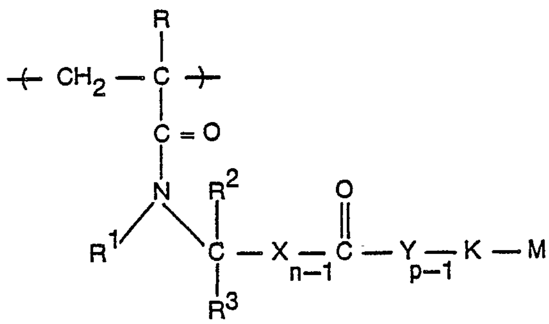

(I)

wherein R is hydrogen or lower alkyl; $R^1$ is hydrogen or lower alkyl; $R^2$ and $R^3$ are each independently hydrogen; lower alkyl; substituted lower alkyl; aryl; alkaryl; aralkyl; cycloalkyl; or $R^2$ and $R^3$ taken together with the carbon atom to which they are bonded constitute a carbocyclic or heterocyclic ring; or $R^3$ is taken together with $R^1$ to form part of a substituted or unsubstituted N-containing ring; X is alkylene having from 1 to 5 carbon atoms; Y is selected from the group consisting of —O—, —NH—, —$NR^4$—, and —S— wherein $R^4$ can be alkyl or aryl; K is a divalent organic radical which is capable of undergoing cleavage in the presence of silver ion or silver complex to release the radical M from said polymer, or which, in the presence of an oxidizing or reducing agent, forms a reaction product capable of undergoing cleavage to release the radical M from said polymer; M is a monovalent organic radical; n is a positive integer one or two; and p is a positive integer one or two. In a preferred embodiment, M is a monovalent organic radical which, when released from the polymer, comprises a photographically useful moiety.

In its product and process aspects, the present invention relates to photographic products and processes comprising polymers of formula (I) wherein K is a divalent organic radical which, in the presence of a cleavage-initiating agent undergoes cleavage or forms a reaction product which undergoes cleavage so as to release a photographically useful moiety from the polymer. The cleavage-initiating agent is provided to the polymer in an imagewise distribution as a result of development of a silver halide emulsion associated with the polymer. In a preferred embodiment, the moiety released from the polymer is a diffusible image dye-providing material.

For a fuller understanding of the nature and objects of the invention, reference should be had to the following detailed description taken in connection with the accompanying drawing.

Brief Description of the Drawing

Fig. 1 is an enlarged, diagrammatic, sectional view illustrating the preparation of a color image according to one aspect of this invention.

Detailed Description of the Invention

According to the present invention, certain polymers have been discovered which comprise recurring units capable of undergoing cleavage in the presence of silver ion, silver complex, or an oxidizing or reducing agent. The polymers of this invention comprise recurring units of the formula

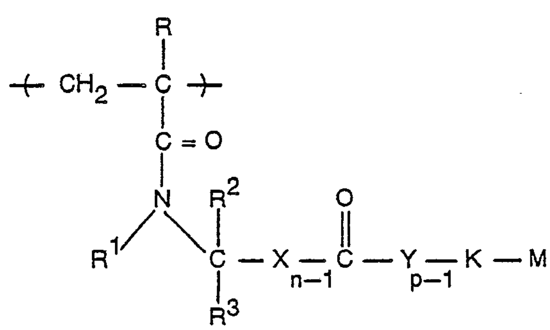

(I)

wherein R is hydrogen or lower alkyl; $R^1$ is hydrogen or lower alkyl; $R^2$ and $R^3$ are each independently hydrogen; lower alkyl; e.g., methyl, ethyl, propyl, isopropyl; substituted lower alkyl; e.g., hydroxymethyl, hydroxyethyl, methylthioethyl; aryl, e.g. phenyl, naphthyl; alkaryl, e.g., tolyl; aralkyl, e.g., benzyl; cycloalkyl, e.g., cyclohexyl; or $R^2$ and $R^3$ together with the carbon atom to which they are bonded constitute a carbocyclic or heterocyclic ring, e.g.

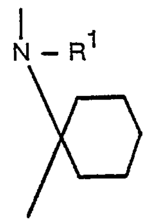

or $R^3$ is taken together with $R^1$ to form part of a substituted or unsubstituted N-containing ring, e.g.,

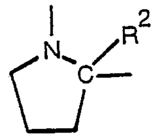

or

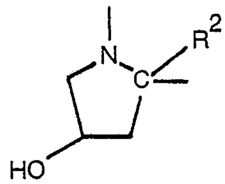

;

X is alkylene having from 1 to 5 carbon atoms, e.g., methylene, ethylene, isopropylene; Y is selected from the group consisting of —O—, —NH—, —$NR^4$—, and —S— wherein $R^4$ is alkyl or aryl; K is a divalent organic radical which is capable of undergoing cleavage in the presence of silver ion or silver complex to release the radical M from the polymer or which, in the presence of an oxidizing or reducing agent, forms a reaction product capable of undergoing cleavage to release the radical M from said polymer; M is a monovalent organic radical; n is a positive integer one or two; and p is a positive integer one or two.

A cleavage reaction undergone by a polymer of formula (I) can involve severance of the K—M bond or severance of one or more bonds internal to K. While the radical M will be released from the polymer in either case, severance of the K—M bond will generally release M by itself from the polymer while severance of one or more bonds internal to K will generally release M in combination with a substituent thereon formed as a result of the cleavage reaction, e.g., a residue of the radical K. In the latter case, any activity or useful properties of the moiety released from the polymer, i.e. of M plus the substituent, may be due principally to the nature of M or of the substituent or to the combination of the two.

Polymers of formula (I) have particular utility in photographic products and processes wherein they can be used to provide an imagewise distribution of a photographically useful moiety. It will be appreciated that silver ion, soluble silver complex, or an oxidizing or reducing agent can be provided in an imagewise distribution in a photographic product as a result of development of an imagewise exposed silver halide emulsion layer. A polymer of formula (I) associated with the silver halide emulsion layer such that it is contacted by the imagewise distribution of silver ion, soluble silver complex, or oxidizing or reducing agent, as appropriate for a given polymer, will thus be caused to undergo cleavage in a corresponding imagewise manner. As a result, an imagewise distribution of a photographically useful moiety can be released from the polymer, i.e. the radical M, upon release from the polymer, can comprise, by itself or in combination with a substituent thereon formed as a result of the cleavage reaction, a photographically useful moiety.

Polymers comprising recurring units of formula (I) can be homopolymers or copolymers, including graft or block copolymers. In general, the copolymers hereof will contain comonomeric units for purposes of imparting desired physical characteristics to the polymer, in particular, those physical characteristics relevant to the occurrence of the imagewise cleavage reaction. For example, the ability of the cleavage-initiating agent to gain access to the cleavable radical may be substantially dependent on the permeability of the polymer-containing layer, which permeability may be modulated by the inclusion of appropriate comonomeric units into the polymer structure.

In a preferred embodiment, the polymers of this invention comprise recurring units of formula (I) wherein $R^1$ is hydrogen, n is one and p is two, i.e., recurring units of formula (II);

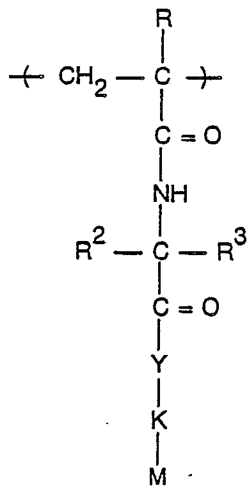

(II)

wherein R, $R^2$, $R^3$, Y, K, and M are as defined previously. In a particularly preferred embodiment, R is hydrogen and $R^2$ and $R^3$ are lower alkyl, preferably methyl. Polymers comprising recurring units of formula (II) may be prepared with facility such that a wide variety of polymers comprising any of a number of both cleavable radicals and moieties released by the cleavage reaction may be provided.

It will be understood that the divalent group Y will generally be non-functional with respect to cleavage of the radical K. Generally, Y will be present in the polymer as a result of the synthetic method used in preparation thereof. In polymers intended for utilization in photographic systems, the bond between Y and the adjacent carbonyl group should be stable in the processing composition to be used for development of the film unit, i.e., a bond which remains intact in the processing composition at least during the processing interval. If Y is not present in the polymer, i.e., if p is 1, the bond between K and the adjacent carbonyl group should have the same stability. Such stability is necessary to ensure that release of a photographically useful moiety occurs in an imagewise manner in the presence of a uniform distribution of such a processing composition. Preferably, Y is —NH— or —$NR^4$—, the resultant amide bonds being, in general, particularly stable in the alkaline processing compositions often used for development of photographic film units.

According to one embodiment of the present invention, K can be a radical which forms, in the presence of an oxidizing agent, a reaction product capable of undergoing cleavage to release the radical M. For example, K can be a radical which couples with an oxidizing agent to form a cleavable reaction product. K can comprise, for example, a phenolic or anilino coupling moiety of the type contained in certain of the compounds disclosed in U.S. Patent No. 3,751,406, issued August 7, 1973. One such moiety is that represented by formula (III)

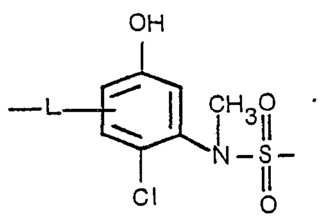

(III)

wherein L is a linking group connected to Y and the sulfonyl group is connected to the radical M. The linking group L can be, for example, alkylene, e.g., methylene, ethylene, isopropylene; arylene, e.g., phenylene; arylenealkylene wherein the point of attachment to Y can be at the arylene or alkylene moiety, e.g., benzyl to provide either

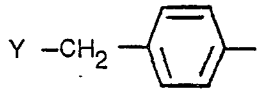

or

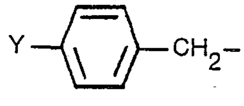

;

a linking group of the formula

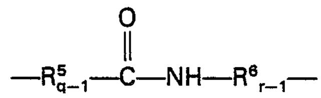

wherein each of $R^5$ and $R^6$ is independently alkylene, arylene, or arylenealkylene, and q and r are independently 1 or 2, provided that the linking group is connected to Y either at $R^5$ or $R^6$; or an ether linkage of the formula

$$-R^7-O-R^8-$$

wherein each of $R^7$ and $R^8$ is independently alkylene, arylene, or arylenealkylene. U.S. Patent No. 3,443,940, issued May 13, 1969, relates to photographic products and processes employing the coupling compounds disclosed in U.S. Patent No. 3,751,406. As disclosed in U.S. Patent No. 3,443,940, replacement of hydrogen or a replaceable substituent at the para position of the phenolic or anilino moiety, e.g., the chloro substituent of formula (III) above, by an oxidized aromatic amino color developing agent effects formation of a reaction product which ring closes in a manner which results in cleavage of the moiety and release of a color-providing material. In accordance with the disclosures of that patent relating to the mechanism of ring closure, a polymer of this invention comprising a radical K of formula (III) may be postulated to undergo the reaction illustrated below. In this illustrative reaction sequence, P represents the grouping

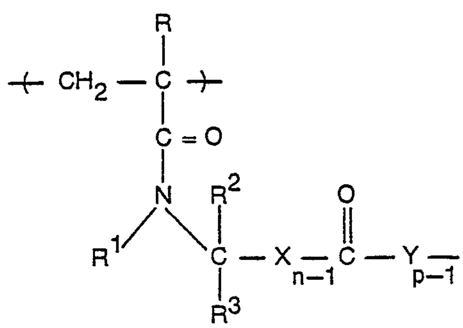

L is the group

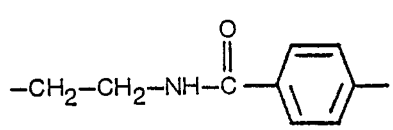,

and N,N-diethyl-p-phenylenediamine is used as an illustrative color developing agent:

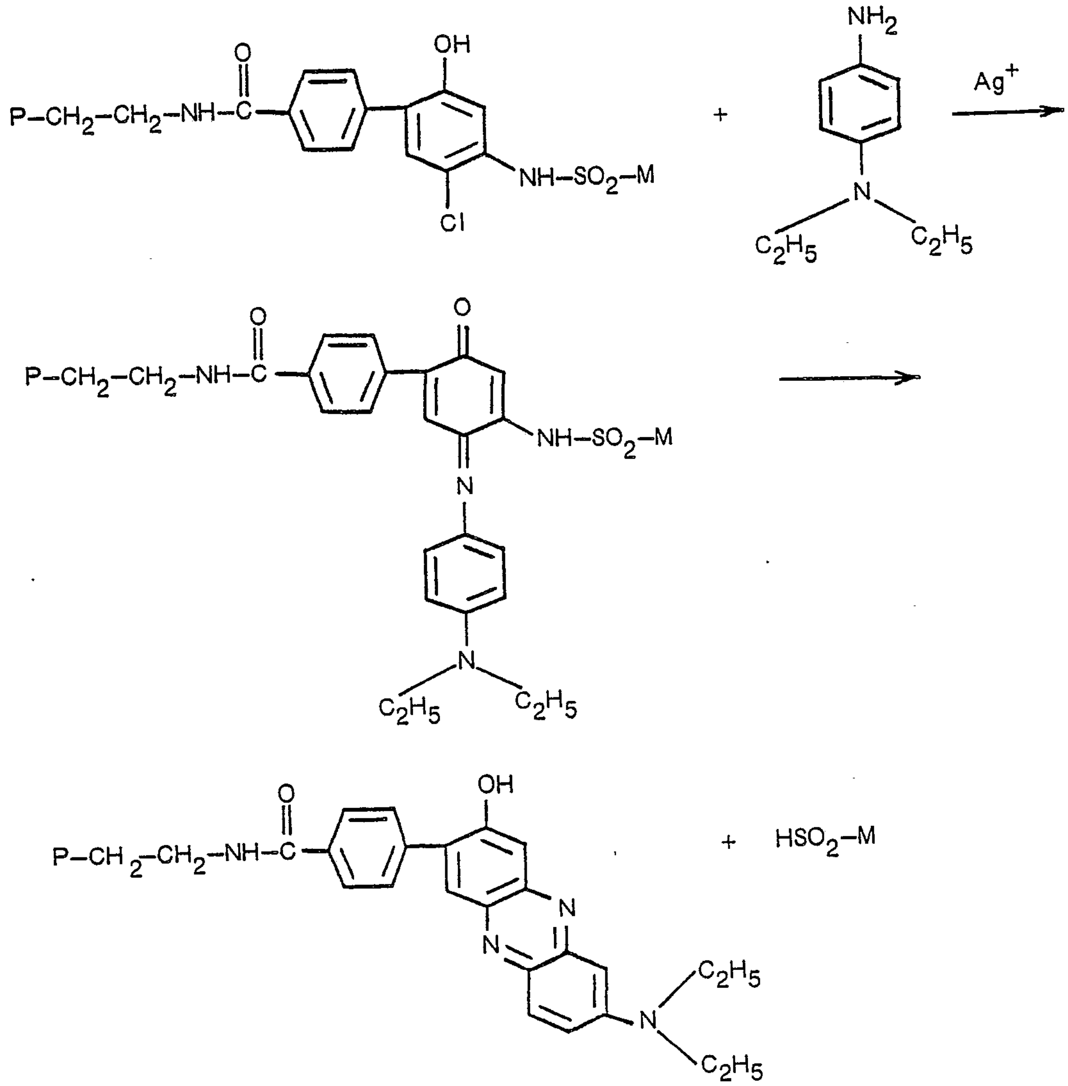


The disclosures of U.S. Patent Nos. 3,443,940 and 3,751,406 are hereby incorporated by reference.

Rather than undergoing a coupling reaction, the radical K can undergo oxidation in the presence of an oxidizing agent to form a cleavable reaction product. K can comprise, for example, a substituted diarylamino moiety of the type contained in certain compounds disclosed in previously referenced U.S. Patent No. 3,751,406. One such moiety may be represented by the following formula (IV):

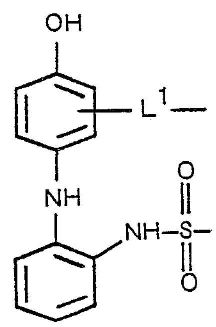

(IV)

wherein $L^1$ is a linking group connected to Y, e.g., any of the linking groups heretofore mentioned in connection with the description of L in formula (III) and the sulfonyl group is connected to the radical M. Oxidation of a moiety of formula (IV), e.g., by an oxidized silver halide developing agent, results in formation of an oxidation product which ring closes in a manner which is believed to result in cleavage of the N—S bond. Thus, the moiety $HSO_2$—M may be released from a polymer comprising a radical K, of formula (IV) or, generally, a radical K comprising any of the aforementioned diarylamino moieties.

Previously referenced U.S. patent No. 3,443,940 relates to diffusion transfer photographic products and processes employing the oxidizable diarylamino compounds disclosed in U.S. Patent 3,751,406. Silver halide, soluble silver complex and oxidized silver halide developing agent are disclosed therein to be capable of oxidizing the diarylamino compounds.

Rather than undergoing oxidation to form a reaction product which ring closes to effect cleavage, the radical K can undergo oxidation to form a reaction product which undergoes alkaline hydrolysis to release the radical M. Various color-providing compounds which function in this manner are well known in the art and are reviewed in James, "The Theory of the Photographic Process", 4th ed., Macmillan Publishing Co., New York, New York, pp 369—372. In accordance with this embodiment of the invention, the radical K can comprise, for example, a group of formula (V):

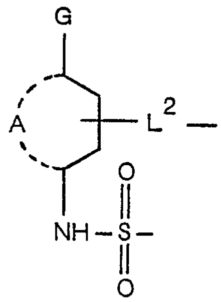

(V)

wherein A represents the atoms necessary to complete a phenylene or naphthalene ring; G is —$OR^9$, or —$NHR^{10}$ wherein $R^9$ is hydrogen or an alkali hydrolyzable moiety such as an acyl group and $R^{10}$ is hydrogen or an alkyl group; $L^2$ is a linking group connected to Y, e.g., any of the linking groups heretofore noted in connection with the description of L in formula (III); and the sulfonyl group is connected to the radical M. A polymer of this invention comprising a radical K of formula (V) may be postulated to undergo the reaction illustrated below in the presence of an oxidizing agent such as an oxidized silver halide developing agent. In this illustrative reaction sequence, P is as previously defined and the radical K comprises a moiety of formula (V) having the specific formula

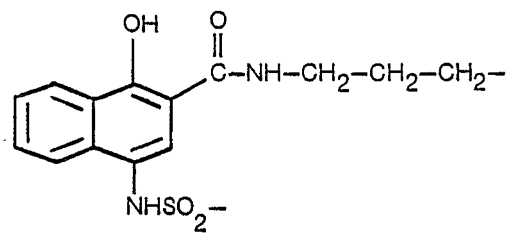

:

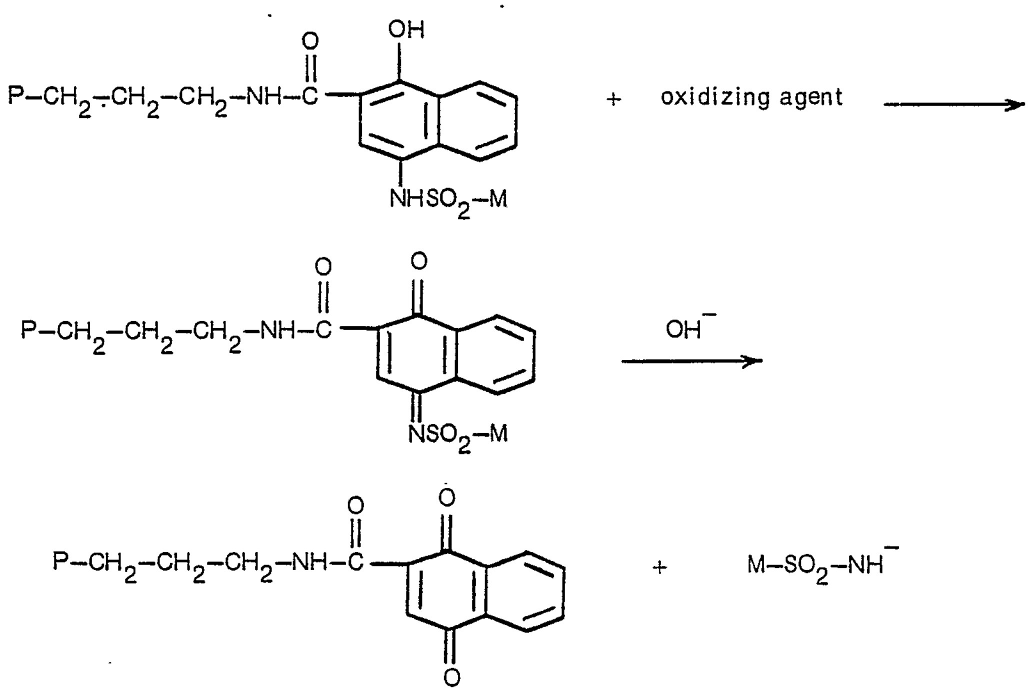

Disclosure relating to compounds comprising a moiety of the type illustrated by formula (V) and their employment in certain diffusion transfer photographic systems can be found, for example, in U.S. Patent Nos. 3,928,312; 3,993,638; and 4,076,529.

It will be understood that the radical K can comprise a moiety other than that of the type illustrated by formula (V) which can undergo oxidation to provide an alkali hydrolyzable product. For example, K can comprise a hydroquinone group of the type contained in compounds disclosed in U.S. Patents Nos. 3,698,897; 3,725,062; and 3,728,113; and o-sulfonamidonaphthol group of the type contained in compounds disclosed in U.S. Patent No. 4,053,312; or a 1,4-disulfonamidoaryl group of the type contained in compounds disclosed in U.S. Patent 4,110,113.

In another embodiment of this invention, K can be a radical which forms, in the presence of a reducing agent, a reaction product capable of undergoing cleavage to release M. Thus, K can comprise a group which undergoes reduction to form said reaction product. In accordance with this embodiment of the invention, K can comprise, for example, a group which, upon reduction, forms a reaction product which undergoes intramolecular nucleophilic displacement to release the moiety M from the polymer, e.g., an aromatic nitro group of the type contained in compounds disclosed in U.S. Patent No. 4,139,389. One such aromatic nitro group is illustrated by the following formula (VI):

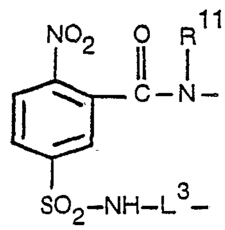

(VI)

wherein $R^{11}$ is alkyl and $L^3$ is a linking group connected, to Y, e.g., alkylene or arylene. Such aromatic nitro groups are disclosed in U.S. Patent No. 4,139,389 to be capable of accepting at least one electron, i.e. undergoing reduction, to provide a nucleophilic group which reacts with an electrophilic center in the aromatic nitro group, e.g. the carbonyl group of formula (VI), thereby effecting cleavage and release of a photographically useful moiety. In a group of formula (VI), for example, the cleavage would apparently involve severance of the CO—N bond. Electron donors or reducing agents which can be provided in photographic film units in an imagewise distribution to effect imagewise reduction of such aromatic nitro groups include the silver halide developing agents and electron donors disclosed as being useful for such purpose in U.S. Patent No. 4,139,389. Disclosure relating to the employment of compounds comprising such groups in photographic elements and processes to provide an imagewise distribution of a photographically useful moiety can be found in U.S. Patent No. 4,139,379.

In another embodiment of this invention, the radical K comprises a group which is itself capable of undergoing cleavage in the presence of silver ions or silver complex to release the radical M, e.g., a 1,3-sulfur-nitrogen group of the type disclosed in U.S. Patent No. 4,098,783, issued July 4, 1978 to Cieciuch, et al., the disclosure of which is hereby incorporated by reference. Compounds comprising aforesaid 1,3-sulfur-nitrogen groups are disclosed therein to be capable of undergoing cleavage in the presence of silver ion or soluble silver complex to liberate an imagewise distribution of a reagent. The radical K may thus comprise a 1,3-sulfur-nitrogen group selected from

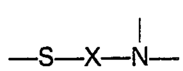 and —S—X—N=

wherein X is

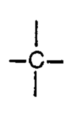; 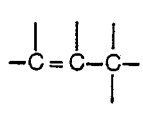; 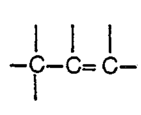; 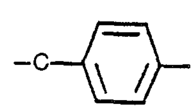; or 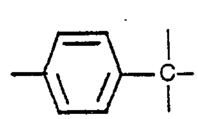.

The 1,3-sulfur-nitrogen group may be contained in a ring system of the formula

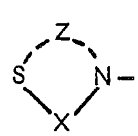 or 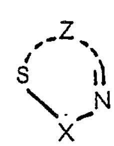

wherein Z represents the atoms, preferably carbon atoms, necessary to complete a ring system having up to 20 members and X has the same meaning given above and preferably is

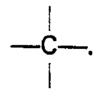

The ring system is preferably linked to the group Y of the polymer through the N atom of the ring or through the ring segment represented by Z. The releasable group M of the polymer is preferably linked to the ring system through X. In a preferred embodiment, the 1,3-sulfur-nitrogen group is contained in a thiazolidine ring. Especially preferred polymers of this invention are, thus, those comprising the preferred recurring units of formula (II) wherein K comprises a thiazolidine ring. These recurring units may be represented by the following formulas (VII), (VIII), and (IV), and preferably (IX):

(VII)

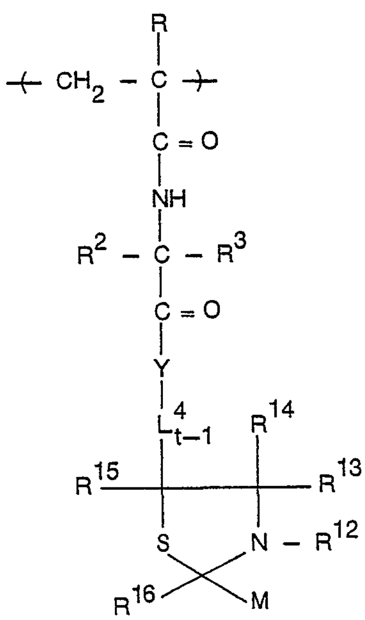

(VIII)

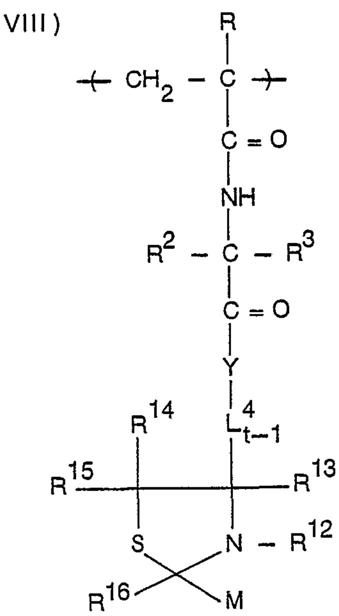

(IX)

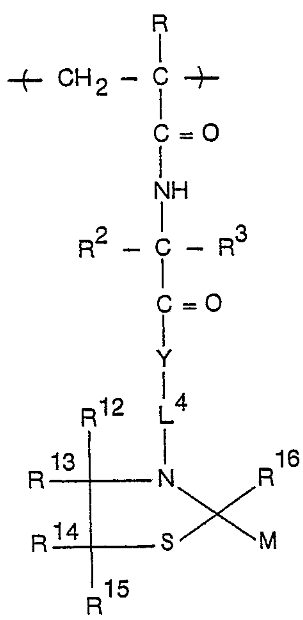

wherein R, $R^2$, $R^3$, Y, and M are as previously defined, $R^{12}$, $R^{13}$, $R^{14}$, $R^{15}$, and $R^{16}$ are each independently hydrogen or a monovalent organic radical, $L^4$ is a divalent linking group, for example, alkylene, preferably containing from 1 to 8 carbon atoms, e.g., methylene, ethylene, propylene; arylene, e.g., phenylene; arylenealkylene wherein the point of attachment to Y can be at the alkylene or arylene moiety, e.g. benzyl to provide

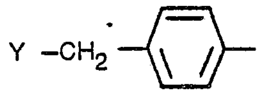

or

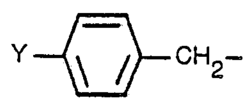

;

an ether linkage of the formula

$$—R^7—O—R^8—$$

wherein $R^7$ and $R^8$ are as previously defined; or cycloalkylene, e.g., cyclohexylene; and t is an integer 1 or 2.

As disclosed in U.S. Patent No. 3,789,489, thiazolidine rings are stable in photographic processing compositions but in the presence of silver ions and/or soluble silver complex undergo cleavage to release a reagent. Besides exhibiting these characteristics under highly alkaline conditions, e.g., those ordinarily employed in diffusion transfer photographic processes, they may be employed under neutral or acid conditions as well. It will be appreciated that in photographic applications silver ion or soluble silver complex can be provided to a polymer of this invention in an imagewise distribution. Thus, in areas of development of an imagewise exposed silver halide emulsion layer the silver halide is reduced while in undeveloped areas an imagewise distribution of silver ion or soluble silver complex is formed. This imagewise distribution can be utilized to initiate a correspondingly imagewise cleavage of an appropriate polymer of this invention, e.g., the silver ion or soluble silver complex can migrate to a polymer hereof associated with the silver halide layer and comprising a radical K containing a thiazolidine ring and initiate imagewise cleavage of the ring. Thus, an imagewise distribution of a photographically useful moiety can be released from the polymer in terms of undeveloped areas of its associated silver halide emulsion layer.

For purposes of illustration, an exemplary cleavage reaction of a polymer of formula (IX) is set out below wherein silver ion is employed in an alkaline environment as a cleavage-initiating agent. It will be understood that the following reaction scheme is illustrative and that the present invention is not intended to be limited to any particular theory or reaction mechanism:

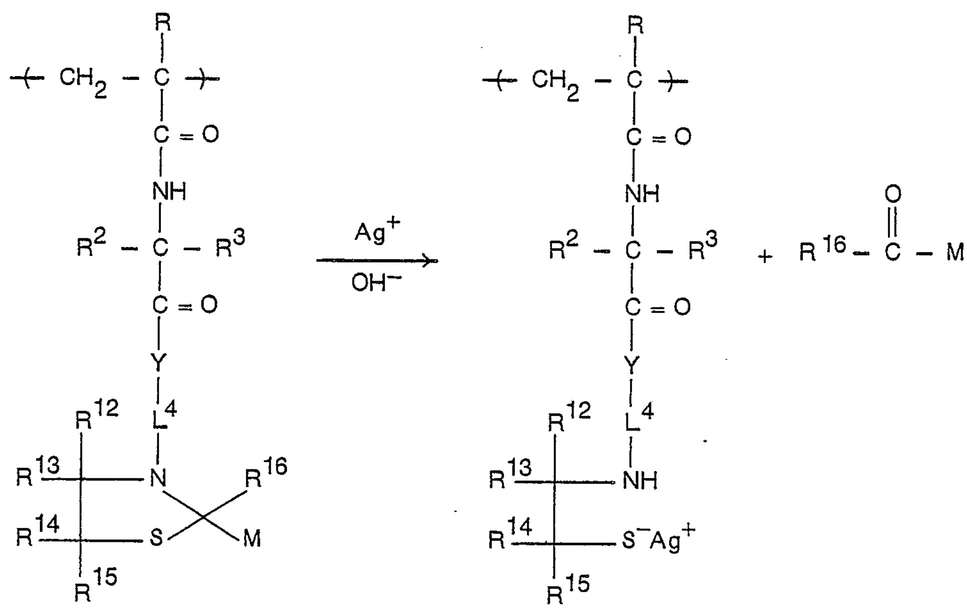


According to the above reaction scheme, cleavage of the thiazolidine ring results in release of the radical M substituted with

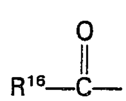

It will be understood that any useful properties of the compound

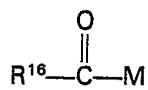

may be due principally to the nature of the radical M or the substituent

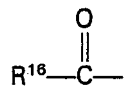

or to the combination of the two.

With regard to the radical K, it should be understood that the above compilation of groups or moieties which are capable of undergoing cleavage or which form reaction products capable of undergoing cleavage [or which form reaction products capable of undergoing cleavage] is not exhaustive and is not intended to be of limiting effect. Rather, the radical K can comprise any group or moiety heretofore known to be capable of undergoing cleavage in the presence of silver ion or silver complex or known to form in the presence of an oxidizing or reducing agent, a reaction product which is capable of undergoing cleavage, provided that the cleavage effects release of M from the polymer.

Preferred polymers of this invention are those which undergo cleavage to release a photographically useful moiety. The photographically useful moiety can be any moiety, compound, or reagent preferably utilized in a photographic film unit in an imagewise manner. For example, the moiety can be a toner, gelatin hardener, silver scavenger, silver solvent, antifoggant, developing agent, or development inhibitor. The moiety may also be a precursor moiety which is capable of reacting to form a photographically useful reaction product. The release moiety can be diffusible or non diffusible, as appropriate for a given usage or photographic process.

In a preferred embodiment of this invention, the photographically useful moiety liberated from the polymer is a diffusible image dye-providing material. The image dye-providing material can be a complete dye or dye intermediate. If a complete dye, color image formation can be achieved in the film units of this invention by transfer of at least a part of the diffusible dye to an image-receiving layer where it can be precipitated, mordanted or otherwise fixed to provide a viewable color image. Alternatively, the diffusible dye can be simply washed away to leave an image associated with the polymer layer. A dye intermediate is any moiety capable of forming a dye upon reaction with another molecule. Color image formation can be achieved by appropriate reaction of the released intermediate prior, during, or subsequent to transfer to form a complete dye.

Examples of complete dyes that may be included in the polymers of this invention include organic dyes such as nitro, indophenol, indoaniline, thiazole, cyanine, di- and triphenyl methane, anthrapyridone, and particularly, azo, azomethine, and phthalocyanine dyes. In addition, useful dyes include those which are colorless or of a color other than that ultimately desired in a certain environment, such as at a particular pH level, but upon a change in environment, e.g., from acid to alkaline conditions, take on a color change. Color-providing materials of this nature include indicator dyes and leuco dyes. It is also within the scope of the present invention to employ metal complexed or complexable dyes and to employ dyes, the non-complexed forms of which are substantially colorless, but which, when complexed during or subsequent to diffusion transfer, are of the desired color.

Particularly preferred polymers of this invention are those of formula (II) wherein K comprises a thiazolidine ring and M is a monovalent radical of an organic dye, e.g., any of the complete dyes mentioned above. With regard to formulas (VII), (VIII), and (IX), the dye moiety released from such polymers may be represented as

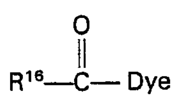

Most preferably the released dye moiety is one which is diffusible and possesses other necessary properties such that it can be employed as an image dye-providing material in diffusion transfer products and processes.

Specific examples of particularly preferred polymers of this invention include those comprising recurring units of the following formulas:

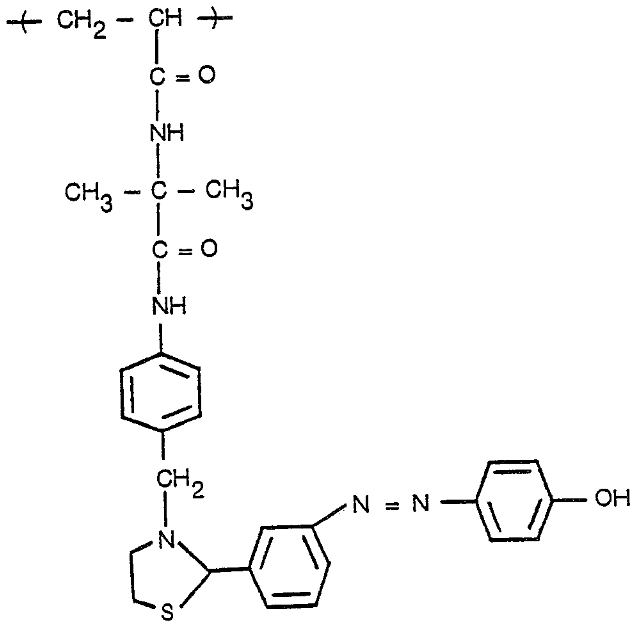

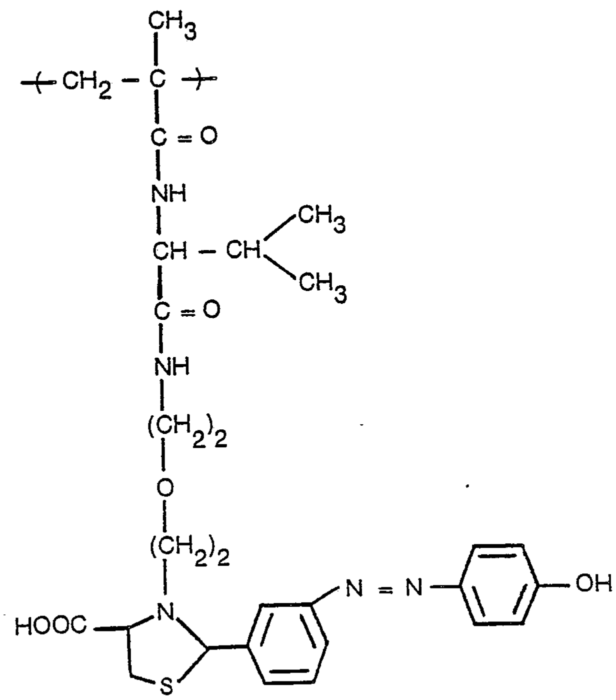

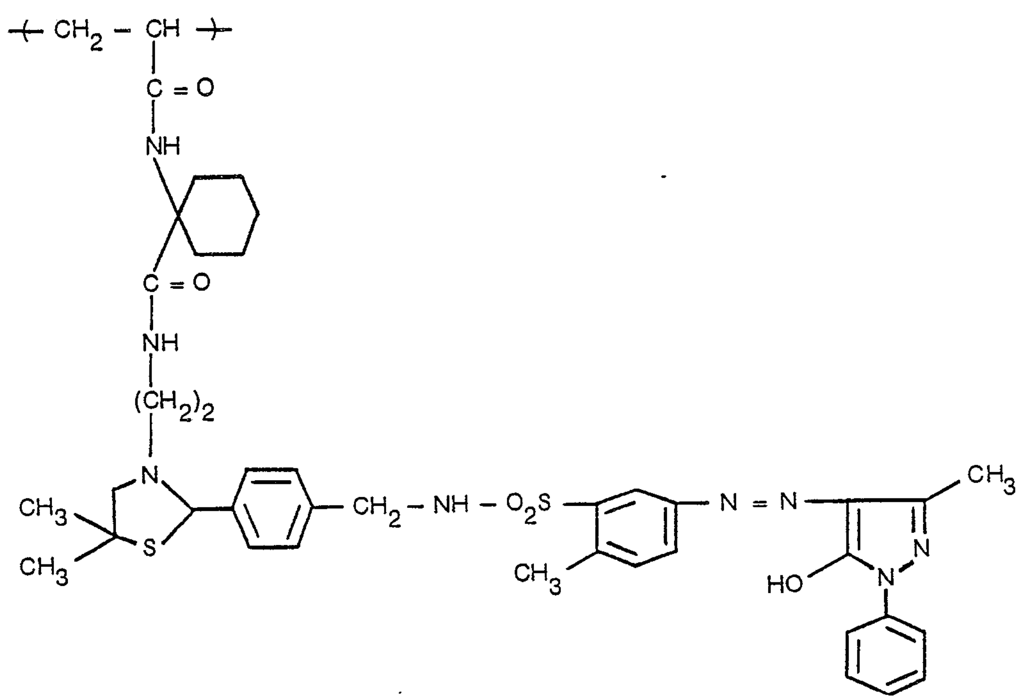

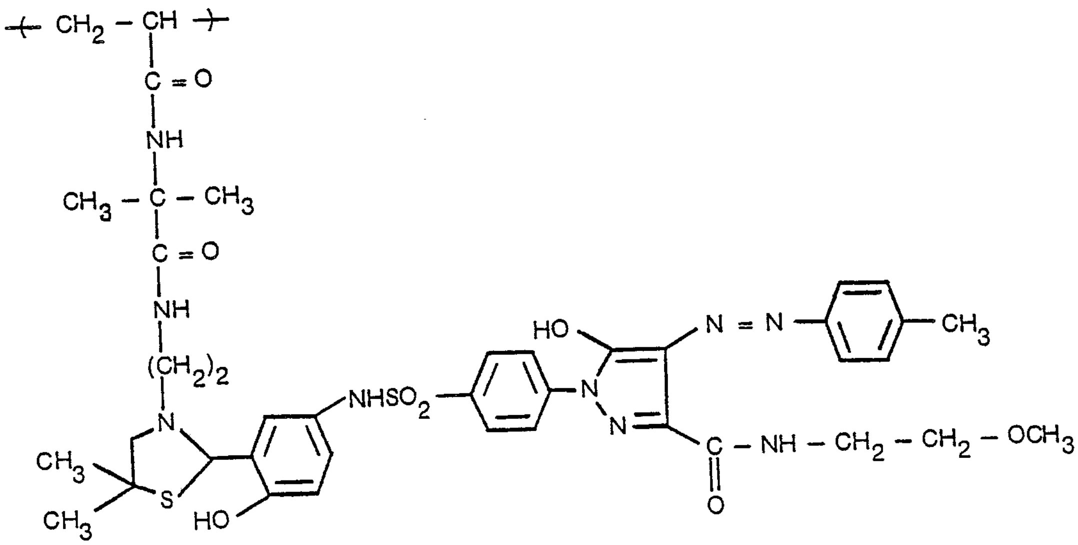

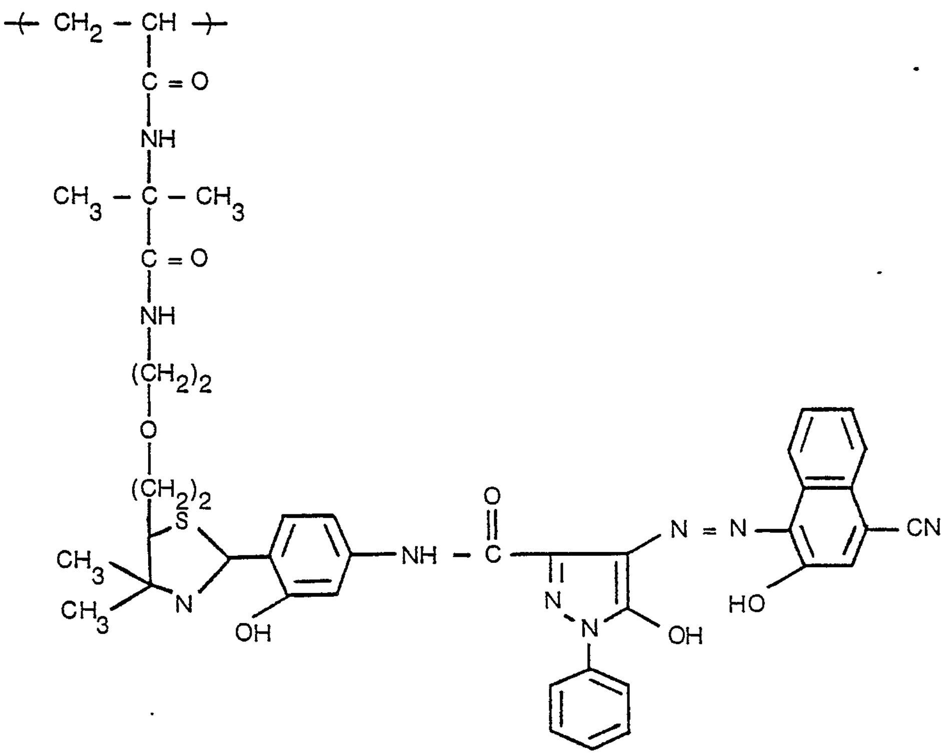

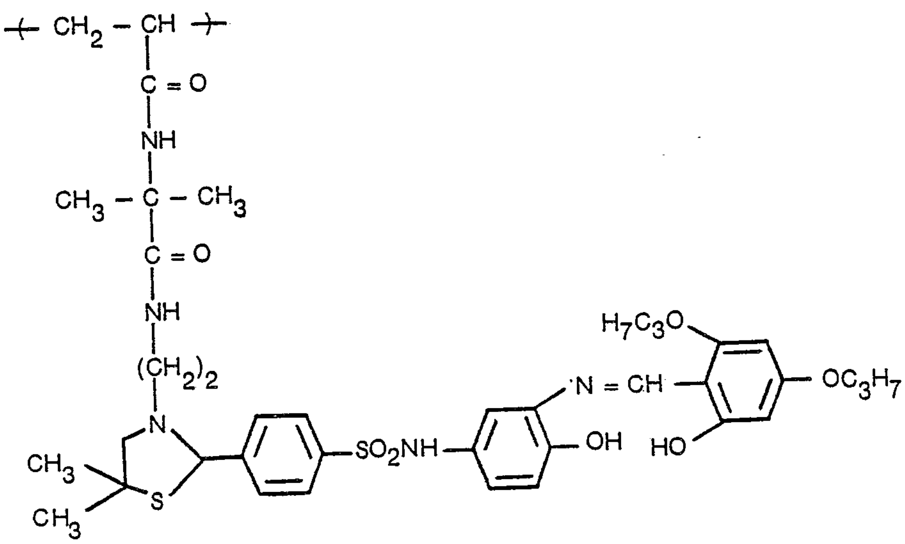

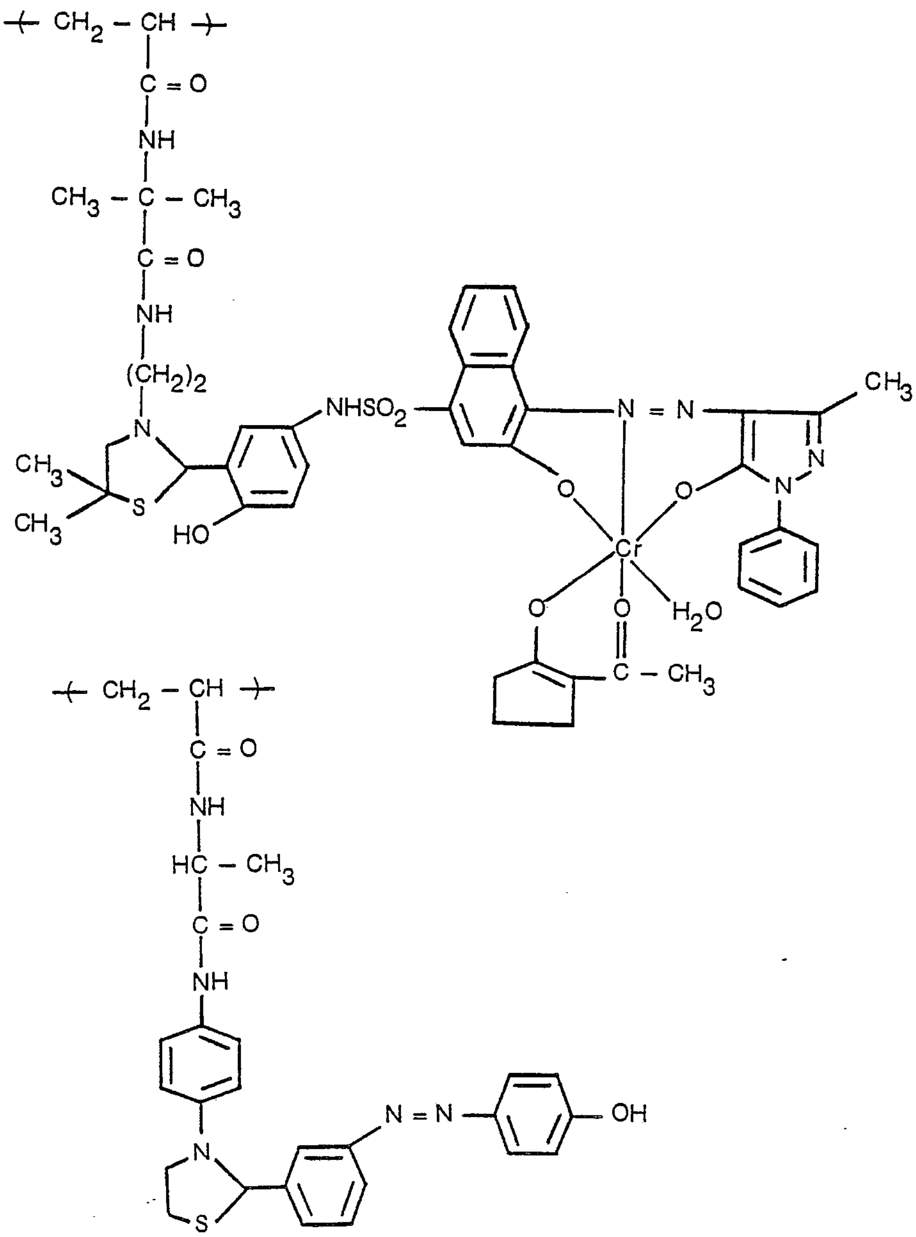

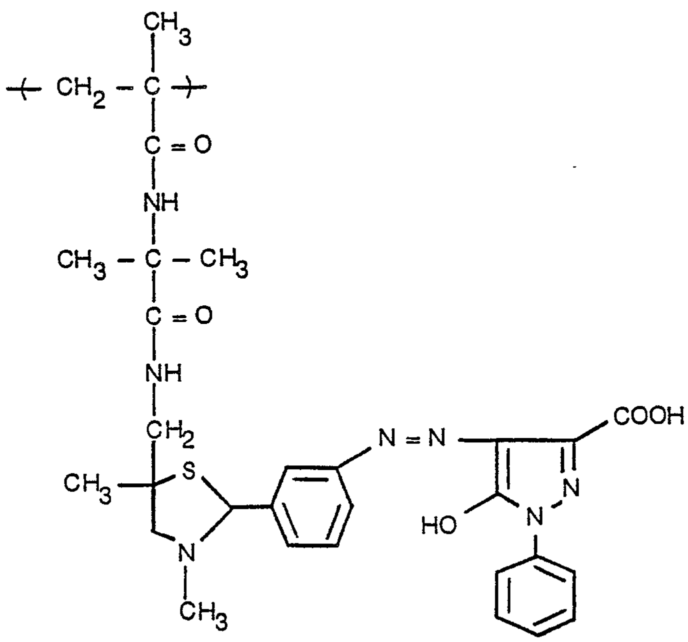

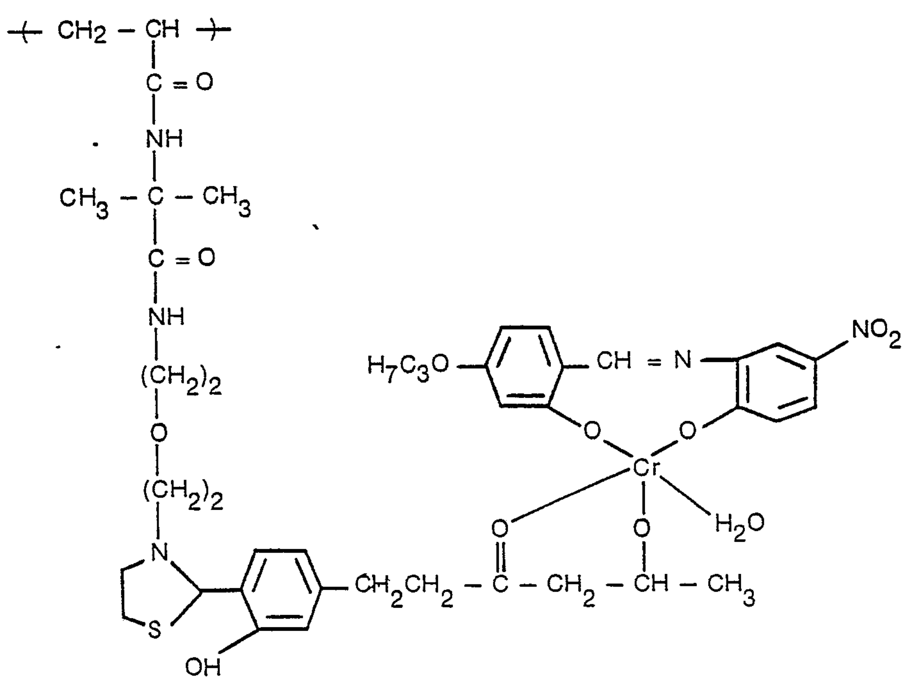

The polymers of this invention can be used to provide an imagewise distribution of a photographically useful moiety in a photographic process comprising the steps of developing with an aqueous alkaline processing composition a photosensitive silver halide emulsion layer having associated therewith a polymer of formula (I) wherein K is a divalent organic radical which in the presence of a cleavage-initiating agent is capable of undergoing cleavage or capable of forming a reaction product capable of undergoing cleavage to release a photographically useful moiety from the polymer; forming as a function of development of said silver halide emulsion an imagewise distribution of the cleavage-initiating agent; and contacting the cleavage-initiating agent with the polymer to effect the cleavage. It will be understood that the cleavage-initiating agent can effect the cleavage reaction by initiating or accelerating cleavage of the radical K or by initiating or accelerating formation of a cleavable reaction product therefrom. The reaction product may undergo cleavage by any suitable predetermined means such as intramolecular ring closing, intramolecular nucleophilic displacement, or alkaline hydrolysis.

As a result of the cleavage reaction, the radical M is released from the polymer. It will be understood that the actual photographically useful moiety released from the polymer may consist of only the radical M or it may consist of M substituted with a group formed as a result of cleavage. The photographic utility of the released moiety may be due principally to M or to the substituent group formed as a result of cleavage or to the two moieties in combination. Thus, with respect to the photographic product and process aspects of this invention, M can be defined as a monovalent organic radical which is released from the polymer as a function of cleavage and which by itself or in combination with a group substituted thereon and formed as a result of cleavage comprises a photographically useful moiety.

In accordance with the above process, the polymers of this invention can be present in the silver halide emulsion layer provided they are photographically innocuous, i.e., incapable of impairing image formation to any unacceptable extent. Preferably the polymers are contained in a separate layer associated with a silver halide emulsion layer. In this instance, the cleavage-initiating agent formed in the vicinity of the silver halide layer diffuses to the polymer-containing layer wherein it effects the cleavage reaction.

The cleavage reaction should occur at a rate sufficient to provide a desired amount of the released photographically useful moiety to a film unit at a desired point in the processing interval. It will be appreciated that the radical K should be stable in the processing composition employed with the film unit in the absence of the cleavage-initiating agent, at least during the processing interval.

In forming color images by the above process, the group released from the polymer is a diffusible or soluble image dye-providing material. Color image formation occurs as a result of the differential in diffusibility or solubility between released and unreleased image dye-providing material. For example, if the image dye-providing material is a complete dye, it may be simply washed away to leave an image associated with the polymer layer, or it may diffuse to an image-receiving layer in superposed relationship with the silver halide emulsion layer and therein be precipitated, mordanted, or otherwise fixed to provide a viewable color image.

The cleavage-initiating agent can be any reagent or catalyst which can be provided in an imagewise distribution as a result of development and which is capable of effecting cleavage of the radical K of the polymer with which it is intended to interact. Depending on the particular photographic process, a cleavage-initiating agent can be made available to the polymer in terms of developed or undeveloped areas of a silver halide emulsion. Thus, the cleavage-initiating agent can be, for example, silver ion, soluble silver complex, i.e., silver complex having sufficient solubility in the processing composition as to permit its use as a cleavage-initiating agent, a reducing agent such as silver halide developing agent made available in terms of undeveloped areas of a silver halide emulsion, or an oxidizing agent such as oxidized silver halide developing agent made available in terms of developed areas of a silver halide emulsion. The particular cleavage-initiating agent employed in a given photographic process will of course depend on the means by which cleavage of the radical K is intended to be initiated. For example, silver ion or soluble silver complex may be employed as the cleavage-initiating agent in processes wherein the radical K is intended to undergo cleavage in the presence of such ions or complexes or intended to undergo oxidation in the presence of such ions or complexes to provide a reaction product capable of undergoing cleavage. Alternatively, oxidized silver halide developing agent may be employed as the cleavage-initiating agent in processes wherein the radical K is intended to undergo oxidation in the presence of such materials to provide a reaction product capable of undergoing cleavage. Oxidized silver halide developing agent may also be employed as the cleavage-initiating agent in processes wherein the radical K comprises a group capable of coupling with such oxidized developing agent to provide a reaction product capable of undergoing cleavage, e.g., groups of the type contained in compounds disclosed in previously referenced U.S. Patent No. 3,751,406.

In processes employing oxidized silver halide developing agent as the cleavage-initiating agent, any silver halide developing agent may be utilized provided that its oxidized form is capable of oxidizing or coupling with the radical K in the intended manner. The developing agent may be contained initially in the processing composition of the film unit or in one or more layers of the film unit. If contained initially in a layer of the film unit, the developing agent may be activated by contact with an aqueous alkaline processing composition. During processing, the developing agent reduces the silver halide emulsion in an imagewise manner thereby becoming oxidized and forming an imagewise distribution of the desired cleavage-initiating agent. The imagewise distribution of oxidized developing agent is then contacted with the polymer to effect a correspondingly imagewise cleavage of the radical K. Examples of silver halide developing agents, the oxidized forms of which can be used as cleavage-initiating agents in this invention include hydroquinone, N,N-diethyl-p-phenylene diamine, N-methyl-aminophenol, ascorbic acid, 1-phenyl-3-pyrazolidone, and 4-amino-N,N-diethyl-3-methylaniline.

In processes employing silver ion or soluble silver complex as the cleavage-initiating agent development of the silver halide emulsion results in an imagewise reduction of the silver halide to silver metal with concurrent formation of an imagewise distribution of silver ion or soluble silver complex in terms of undeveloped areas. This imagewise distribution is contacted with the polymer to effect the desired cleavage reaction. In such processes, the processing composition normally contains a silver

halide developing agent and a silver halide solvent. However, these materials may also be present initially in one or more of the layers of the film unit. When such materials are present initially in a layer of the film unit, they may be solubilized by contact with a suitable aqueous medium, e.g., an aqueous composition initially retained in a rupturable pod, to form a processing composition. The silver halide solvent may be any of the heretofore known materials such as sodium thiocyanate, uracil, and 6-(methylthiomethyl)uracil. Silverhalide solvent precursors may also be used, such as described in U.S. Patent No. 3,698,898, issued October 17, 1972. The silver halide developing agent may be selected from any of those commonly known to the art including aminoreductones, aminophenols, e.g., p-methylaminophenol sulfate; dihydroxybenzenes, e.g., hydroquinones; and reductic acids, e.g., tetramethylreductic acid.

It will be appreciated that if the moiety released from a polymer of this invention is a diffusible image dye-providing material both negative and positive images may be obtained employing such material depending on the particular cleavable moiety of which the radical K is comprised and on the particular type of silver halide emulsion used in association with the polymer. Thus, in one system of the present invention a positive transfer image may be produced using a polymer comprising a cleavable radical K capable of undergoing cleavage in the presence of silver ions and/or soluble silver complex in association with a conventional silver halide emulsion which forms a developable latent image in areas of exposure. In exposed areas of this type of emulsion, development results in reduction of silver halide to silver metal while an imagewise distribution of silver ion or soluble silver complex is formed in terms of unexposed areas. Contacting this imagewise distribution with the polymer effects cleavage of the radical K and release of an imagewise distribution of diffusible image dye-providing material corresponding to unexposed areas of the emulsion which can be transferred at least in part to an image-receiving layer to form therein a positive color transfer image. Conversely, negative color images may be obtained by utilization of the polymers described immediately above in conjunction with direct positive emulsions, e.g., internal latent image emulsions, wherein the imagewise distribvution of silver ions and/or soluble silver complex will be formed in terms of exposed and, thus, undeveloped areas of the emulsion layer.

In another system of the present invention, a positive transfer image can be obtained using a polymer comprising a radical K capable of undergoing imagewise oxidation in the presence of an oxidized silver halide developer to provide an oxidized species capable of undergoing cleavage in the presence of alkali, e.g., alkaline hydrolysis, in association with a direct-positive emulsion, e.g., internal latent image emulsions such as those described in previously referenced U.S. Patent No. 4,076,529. Direct-positive emulsions may be characterized as being developable in unexposed areas. Thus, development results in an imagewise distribution of oxidized developer formed in terms of unexposed areas. When contacted with a polymer of the foregoing description, the oxidized developer effects cleavage of the radical K and release of an imagewise distribution of diffusible image dye-providing material corresponding to unexposed areas of the emulsion which can be transferred at least in part to an image-receiving layer to form a positive color transfer image.

In an analogous fashion, polymers of the foregoing description can be employed in association with the more conventional negative-working emulsions to provide negative color transfer images.

The polymers of the present invention comprising recurring units of formula (II) wherein K comprises a thiazolidine ring and M is a monovalent radical of an organic dye can be employed to provide an imagewise distribution of an organic dye in a process which comprises developing with an aqueous alkaline processing composition an exposed photosensitive silver halide emulsion layer having associated therewith the aforementioned polymer; forming in undeveloped areas an imagewise distribution of silver ion or soluble silver complex; contacting the imagewise distribution with the polymer to effect a corresponding imagewise cleavage of the thiazolidine ring; and releasing the radical M from the polymer as a function of the cleavage of the thiazolidine ring. Preferably, the organic dye, released from the polymer is diffusible in the processing composition such that it is capable of being employed as a color image-providing material in photographic diffusion transfer products and processes.

The film units of this invention comprise a support carrying at least one photosensitive silver halide emulsion layer having associated therewith a polymer of formula (I) comprising a radical K which, in the presence of a cleavage-initiating agent, is capable of undergoing cleavage or capable of forming a reaction product capable of undergoing cleavage to release a photographically useful moiety from the polymer. The association between the polymer and silver halide layer is such that an imagewise distribution of the cleavage-initiating agent, formed as a result of development of the silver halide can be contacted with the polymer to effect a correspondingly imagewise cleavage.

Preferred film units of this invention are diffusion transfer film units comprising a support carrying at least one photosensitive silver halide emulsion layer having associated therewith a polymer of the present invention; and an image-receiving layer, e.g., a dyeable stratum. Following photoexposure, the silver halide emulsion is developed with an aqueous alkaline processing composition and, as a function of development, an imagewise distribution of a cleavage-initiating agent is formed which, upon contact with the polymer, effects cleavage thereof to release an imagewise distribution of a photographically useful moiety. If the moiety liberated from the polymer is a diffusible image dye-providing material,

color transfer images can be formed in such film units by transfer of at least a part of the imagewise distribution of the diffusible image dye-providing material to the image-receiving layer.

For purposes of illustration, diffusion transfer film units of the present invention adapted for formation of color transfer images will hereinafter be described in terms of the polymers hereof which undergo cleavage to release a diffusible image dye-providing material. It will be understood, however, that the polymers hereof may be utilized in such film units to provide photographically useful moieties other than image dye-providing materials and that such polymers may be contained in the film unit in an associative relationship with a silver halide emulsion which is also associated with any of the various types of diffusion transfer image dye-providing materials in the art.

Diffusion transfer film units within the present invention adapted for formation of color transfer images include those wherein the silver halide emulsion layers and the image-receiving layer are initially contained in separate elements. Such film units may thus comprise: (a) a photosensitive element comprising a support carrying at least one photosensitive silver halide emulsion layer having associated therewith a polymer of the present invention capable of undergoing imagewise cleavage to release a diffusible image dye-providing material; and (b) an image-receiving element comprising a support which may be opaque or transparent as appropriate for a given process and an image-receiving layer. As illustrated in the accompanying drawing, FIG. I sets forth a diagrammatic sectional view of this type of film unit, shown with the processing composition distributed between the superposed elements. Film unit 10 comprises a photosensitve element 11 comprising a support 12, a layer 13 comprising a polymer hereof capable of undergoing imagewise cleavage to release a diffusible image dye-providing material, i.e., a "dye-providing polymer" layer, and a photosensitive silver halide emulsion layer 14; and an image-receiving element 15 comprising an image-receiving layer 16, and a support 17. The respective elements may be brought into superposition subsequent or prior to exposure. Subsequent to exposure of photosensitive element 11, aqueous alkaline processing composition 18 is distributed between the superposed elements to initiate development. As a consequence of development, an imagewise distribution of a cleavage-initiating agent is formed in photosensitve layer 14 which diffuses to dye-providing polymer layer 13 wherein it initiates cleavage to release an imagewise distribution of a diffusible image dye-providing material. This imagewise distribution is transferred, at least in part, to the receiving layer 16 to form therein a color transfer image. If an opaque reflective background is provided by the image-receiving element, e.g., if that side of support 17 contiguous to image-receiving layer 16 is an opaque reflective surface, the image formed may be viewed as a reflection print upon separation of the elements. By using a transparent image-receiving element, the resultant image may be viewed as a transparency upon separation of the elements. Alternatively, if the image-receiving element is transparent and if the photosensitive element and/or processing composition contains a light reflective layer, e.g., a white pigment such as titanium dioxide, the image may be viewed as a reflection print against the background provided by the light-reflecting layer, without separation of the elements.

If, prior to release from the polymer, the image dye-providing material is a complete dye, such that the dye-providing polymer layer is colored, an image associated with the polymer layer can be obtained, e.g., by separating the photosensitve and image-receiving elements of the film unit at the completion of development and washing the photosensitive element to remove unwanted residuals such as residual silver halide. It has unexpectedly been found that this washing procedure can be conducted with facility to yield high quality images which compare favorably with images normally obtained by such procedures utilizing conventionally immobilized image dye-providing materials. If the photosensitive element comprises a transparent support layer, the image may be viewed as a transparency.

Rather than the photosensitive layer and the image-receiving layer being in separate elements, they may be in a single element, i.e., integral negative-positive film units wherein the negative and positive components are contained in a photosensitive laminate or otherwise retained together in an integral structure at least prior to exposure. For example, the polymers hereof can be used in integral film units of the type described in U.S. Patent No. 3,415,644. In accordance with the disclosures therein, film units of this type within the present invention comprise: (a) a photosensitive element comprising a composite structure containing, in sequence, an opaque support layer, preferably an actinic radiation opaque flexible sheet material, a photosensitive silver halide emulsion layer having associated therewith a polymer of the present invention capable of undergoing imagewise cleavage to release a diffusible image dye-providing material, an image-receiving layer, and a transparent support layer, preferably an actinic radiation transmissive flexible sheet material; and (b) means retaining an aqueous alkaline processing composition integrated with the film unit so that the processing composition can be distributed between the silver halide layer and image receiving layer. In this type of film unit a light-reflecting pigment is preferably provided by the processing composition such that the distribution of the processing composition between the silver halide layer and image-receiving layer provides a light-reflecting layer against which a dye image formed in the image-receiving layer can be viewed without separation of the components.

The polymers of this invention can also be used in integral negative-positive film units of the type described in U.S. Patent No. 3,594,165. In accordance with the disclosures therein, film units of this type within the present invention comprise: (a) a photosensitive laminate comprising, in sequence, a transparent support layer, an image-receiving layer, a processing composition permeable, light-reflecting layer against which a dye image formed in the image-receiving layer can be viewed, and at least one photosensitive silver halide emulsion layer having associated therewith a polymer of the present invention capable of undergoing imagewise cleavage to release a diffusible image dye-providing material; (b) a transparent sheet superposed substantially coextensive the surface of the photosensitive laminate opposite the transparent layer; and (c) means retaining an aqueous alkaline processing composition, which includes an opacifying agent, integrated with the film unit such that the processing composition can be distributed between the photosensitive laminate and the transparent sheet. Color images formed within the image-receiving layer can be viewed against the background of the light-reflecting layer without separation of the transparent sheet from the photosensitive laminate.

Multicolor transfer images may be prepared in the film units of the present invention which comprise at least two selectively sensitized silver halide emulsion layers, each associated with a polymer of the present invention capable of undergoing imagewise cleavage to release a diffusible image dye-providing material. In forming multicolor images it is preferred that the image dyes possess spectral absorption characteristics substantially complementary to the predominent sensitivity range of their associated emulsions. It is also preferred that each of the silver halide emulsion layers and its associated dye-providing polymer be spaced from the remaining emulsion layers and their associated dye-providing polymers by interlayers which function to better confine a given cleavage-initiating agent to the respective polymer layer with which it is intended to interact. For example, it is disclosed in U.S. Patent No. 4,060,417 that color separation is improved in processes utilizing silver ion and/or soluble silver complex to liberate an imagewise distribution of image dye-providing material by use of one or more interlayers containing a scavenger for silver ion and/or soluble silver complex. Scavenger materials useful in such interlayers include polymers comprising recurring aminoethanethiol moieties such as those disclosed in U.S. Patent No. 4,021,416; polymers comprising recurring mercapto-substituted tetrazoles such as those disclosed in U.S. Patent No. 4,134,768; and silver precipitating agents such as metallic sulfides and selenides and colloidal metals disclosed in U.S. Patent No. 2,698,237. In an analogous fashion, interlayers comprising scavengers for oxidized silver halide developing agent may be used to better confine such developing agent to the appropriate polymer-containing layer. Immobilized scavengers for oxidized silver halide developing agent are well known. Such materials generally are reducing agents substituted with an immobilizing group and capable of reducing the oxized developing agent to an innocuous species. Examples of materials which may be employed in this manner in film units of the present invention include substituted hydroquinones such as di-tert-octylhydroquinone and 2,5-di-secdodecylhydroquinone; zwitterionic salts of p-aminophenols such as those disclosed in U.S. Patent No. 3,459,548; and anilino phenols and phenylenediamines such as those disclosed in U.S. Patent No. 3,482,971.

In certain of the polymers of the present invention, the cleavage may be initiated by more than one type of cleavage-initiating agent. For example, previously referenced U.S. Patent No. 3,443,940 discloses that certain of the intramolecular ring closing compounds described therein may undergo ring closure and cleavage in the presence of either soluble silver complex provided in terms of undeveloped areas of the silver halide emulsion or oxidized silver halide developer provided in terms of developed areas of the silver halide emulsion. As a result, a uniform rather than imagewise cleavage reaction may occur if both types of cleavage-initiating agent are provided essentially simultaneously and if the respective rates of cleavage are comparable. It may thus be necessary to prevent a potential cleavage-initiating agent from gaining access to the polymer by means of an appropriate scavenger, such as those mentioned above, or by otherwise rendering the potential cleavage-initiating agent incapable of diffusing to the polymer-containing layer, e.g., omitting silver solvent from the processing composition or utilizing silver halide developing agents which, at least in their oxidized form, are substantially non-diffusible in the processing composition.

Processing compositions customarily employed in diffusion transfer film units are aqueous alkaline processing compositions which may comprise silver halide developing agents, silver solvents, antifoggants, viscous film-forming reagents, and other photographically useful compounds. It will be understood, however, that these ingredients can be present initially in the film unit, in which case the processing composition is formed by contacting the film unit with a suitable aqueous medium to form a solution containing these ingredients.

In addition to releasing a photographically useful moiety in an imagewise distribution, a cleavage reaction undergone by a polymer of this invention can also function to effect a change in one or more properties of the polymer, e.g., a change in solubility, permeability, light absorptivity, or chemical reactivity. A change in chemical reactivity may involve, for example, generation of a reactive site on the polymer at the point of cleavage. It will be appreciated that a change in a property of the polymer can be effected by a cleavage reaction which releases a photographically inert or non-functional moiety from the polymer as well as a photographically useful moiety.

While the polymers of this invention are particularly useful in photographic processes wherein a cleavage-initiating agent is provided in an imagewise distribution, they may be used in other processes wherein a cleavage-initiating agent is provided by other means. If provided in a non-imagewise manner, the cleavage reaction will of course be correspondingly non-imagewise. As a result of cleavage, a distribution of a useful chemical may be provided, e.g., an anti-oxidant, pharmaceutical, or anticorrosion agent, or a change in one or more properties of the polymer may be effected.

The polymers of the present invention may be prepared by reaction of acrylyl chlorides, anhydrides, or esters of the formulas

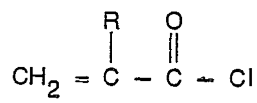

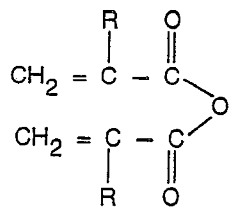

and

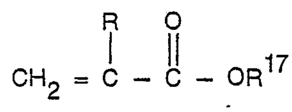

respectively, wherein R is as previously defined and $R^{17}$ is alkyl or aryl, with a primary or secondary amine of the formula

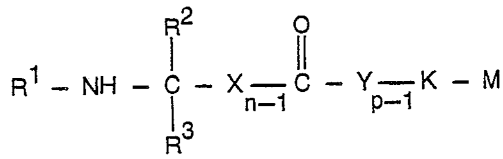

wherein $R^1$, $R^2$, $R^3$, X, Y, K, M, n and p are as previously defined to form a polymerizable monomer of the formula

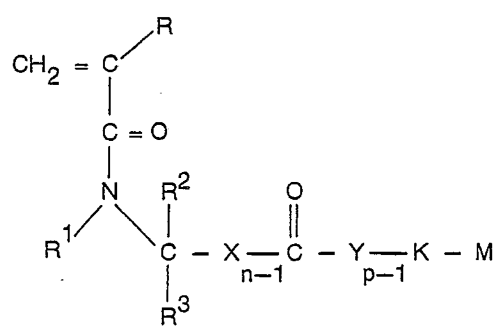

followed by polymerization to prepare the novel polymers hereof. When using the acrylyl chloride intermediate, the reaction may be facilitated by the presence of an acid acceptor. The use of a small amount of polymerization inihibitor, e.g., hydroquinone, may also be desirable in order to prevent premature polymerization.

The polymers of this invention may also be prepared by reacting an N-acrylylamino acid of the formula

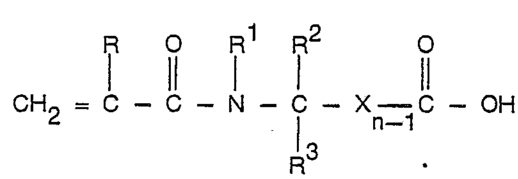

in known manner to form a mixed anhydride intermediate; reacting the mixed anhydride intermediate with an imagewise cleavable nucleophilic compound of the formula

$$Y^1—K—M$$

wherein $Y^1$ is a nucleophilic group and K and M are as previously defined, to form the polymerizable monomer illustrated above, and polymerizing the monomer. It will be appreciated that Y is the residue of $Y^1$ resulting from reaction with the mixed anhydride intermediate. Suitable nucleophilic groups $Y^1$ include $—NH_2$, $—NHR^4—$, —OH, and —SH, wherein $R^4$ is as previously defined. The mixed anhydride intermediate may be formed, for example, by reaction of the N-acrylylamino acid with a carbodiimide such as dicyclohexylcarbodiimide or N-ethyl-N'-($\gamma$-dimethylaminopropyl)carbodiimide hydrochloride; and anhydride such as acetic anhydride or trifluoroacetic anhydride; an acid halide such as acetyl chloride; or an alkyl or benzyl haloformate such as ethyl chloroformate or benzyl chloroformate. The reaction of the nucleophilic compound with the mixed anhydride may be facilitated by the presence of a 4-dialkylaminopyridine catalyst such as 4-(N,N-dimethylamino)pyridine or 4-pyrrolidinopyridine.

In preparing the preferred polymers of this invention, i.e., polymers of formula (II) above, by the method immediately above, the N-acrylylamino acid will be an N-acrylyl-$\alpha$-amino acid of the formula

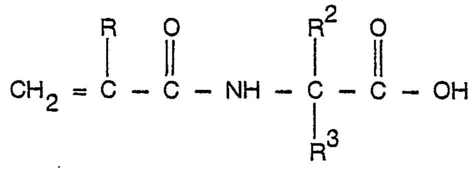

Rather than forming the mixed anhydride intermediate, such $\alpha$-amino acid may preferentially react in the presence of the reagents specified immediately above to form a 2-alkenyl-5-oxazalone of the formula

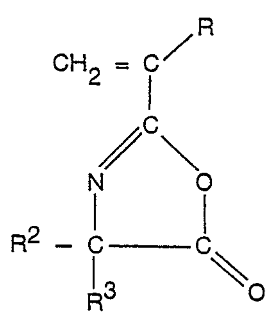

wherein R, $R^2$ and $R^3$ are as defined previously. For example, N-acrylyl-$\alpha$-amino acids may be reacted with alkyl haloformates such as ethyl chloroformate to prepare 2-alkenyl-5-oxazalones as described, for example, by Taylor et al., J. Polym. Sci. B, vol. 7, 597 (1969). Benzyl haloformates may also be so utilized. N-acrylyl-$\alpha$-amino acids may also be reacted with anhydrides such as acetic anhydride and trifluoroacetic anhydride to undergo a cyclodehydration reaction to form 2-alkenyl-5-oxazalones as described, for example, by J. W. Lynn in J. Org. Chem., 24, 1030 (1959) and in Brit. Patent No. 1,121,418. Such oxazalones may also be prepared by reacting the N-acrylyl-$\alpha$-amino acid with a carbodiimide such as dicyclohexylcarbodiimide or N-ethyl-N'-($\gamma$-dimethylaminopropyl)carbodiimide hydrochloride. Formation of 5-oxoazolones by this method is disclosed by Chen, et al., Synthesis, No. 3, p. 230, (1979).

2-Alkenyl-5-oxoazolones may be derivatized by a nucleophilic compound

$$Y^1—K—M$$

and the resulting monomeric derivative polymerized in accordance with the following reaction scheme

(A):

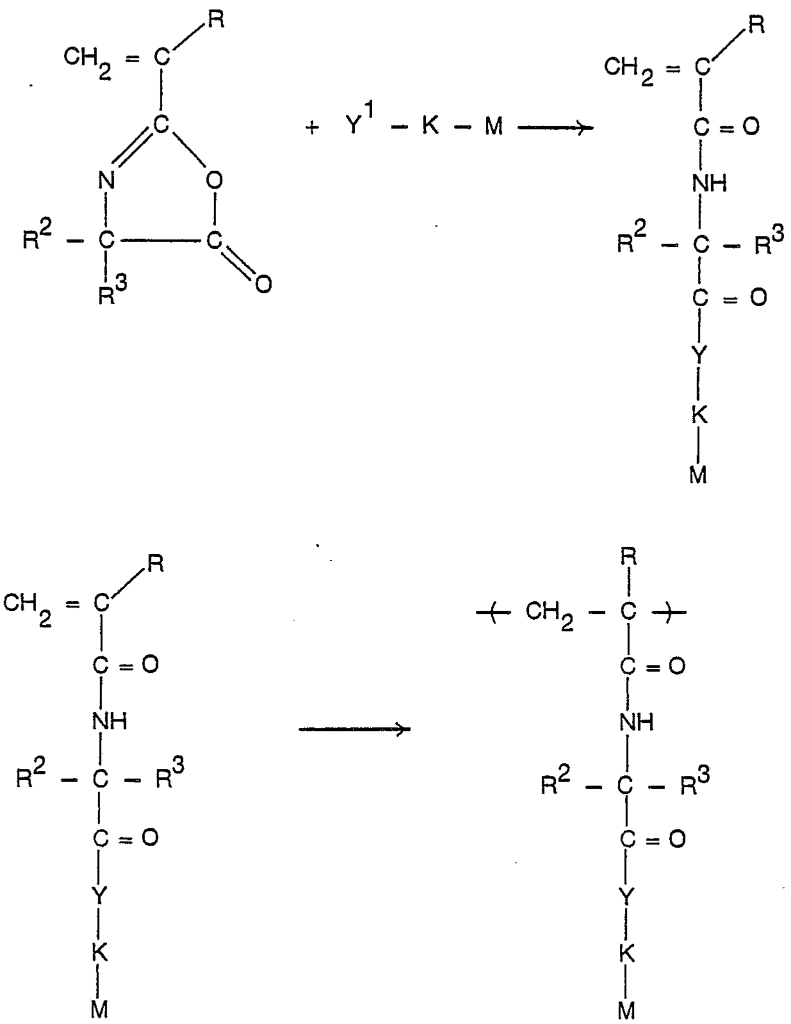

(A)

wherein R, $R^2$, $R^3$, Y $Y^1$, K, and M are as previously defined.

The reactivity of 5-oxazalone rings towards nucleophilic groups such as amino, hydroxyl, and thiol groups is known. See, for example, U.S. Patent No. 3,488,327; previously referenced British Patent No. 1,121,418; and Iwakura, et al., J. Polym, Sci., A—1, 6(9), 2681 (1968). In general, such reactions proceed readily and in high yield. However, as disclosed in copending U.S. Pat. Appl. Ser. No. 130,527, filed March 14, 1980, such reactions may be facilitated by use of a 4-dialkylaminopyridine catalyst such as 4-(N,N-dimethylamino)pyridine or 4-pyrrolidinopyridine.

In preparing the polymers of formula (II) by use of a 2-alkenyl-5-oxazalone intermediate, it is preferred that the oxazalone be isolated and, if necessary, purified prior to reaction with the nucleophilic compound. However, if such steps are impractical, e.g., if the oxazolone is highly reactive, it may be generated in an inert solvent and reacted in situ to yield the desired monomer.

The derivatization of the oxazalone with the nucleophilic compound can be conducted in inert solvents such as tetrahydrofuran, chloroform, dichloromethane, dimethylformamide, benzene, dioxane, toluene, acetone, methylethylketone, and ethyl acetate. The reaction may be conducted over a temperature range of about 0°C to about 100°C. In addition, it may prove desirable to include a small amount of polymerization inhibitor such as hydroquinone or t-butyl-pyrocatechol in the derivatization reaction mixture to prevent premature polymerization.

The monomers prepared by any of the above methods may be polymerized according to different polymerization techniques such as bulk, solution, suspension, or emulsion polymerization. Homopolymers or copolymers may be prepared. The polymerization can be initiated chemically, e.g., by suitable free radical or redox initiators or by other means such as heat or incident radiation. As examples of chemical initiators mention may be made of azobisisobutyronitrile, potassium persulfate, sodium bisulfite, benzoyl peroxide, diacetyl peroxide, hydrogen peroxide, and diazoaminobenzene. It will be appreciated that the chosen means of initiation should be substantially incapable of degrading or otherwise adversely reacting with either the reactants or products of the reaction. The amount of

catalyst used and the reaction temperature may be varied to suit particular needs. Generally, the polymerization should proceed satisfactorily by carrying out the reaction at a temperature between 25°C and 100°C and using less than 5% by weight of initiator, based on the starting weight of the polymerizable monomer or monomers.

Examples of comonomers for use in the preparation of copolymers of the present invention include acrylic acid; methacrylic acid; 2-acrylamido-2-methylpropane sulfonic acid; ethyl acrylate; methylmethacrylate; methyl acrylate; N-methylacrylamide; N-methylmethacrylamide; N,N-dimethylacrylamide; diacetone acrylamide; and styrene.

In a preferred method of synthesis, the preferred polymers of the present invention of formula (II) are prepared by derivatization of polymeric 5-oxazalone in accordance with the following reaction scheme (B):

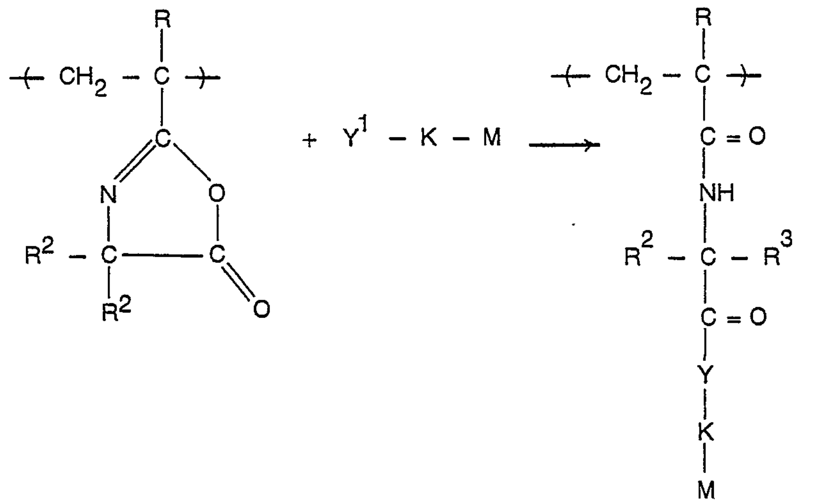

(B)

Reaction scheme (B) provides a uniquely advantageous method by which a diffusible moiety can be immobilized by direct attachment to an existing polymer. The method of attachment is an addition reaction which does not result in formation of deleterious by-products, such as neighboring reactive pendant groups, which might adversely affect either the stability of the pendant group formed by reaction scheme (B) or the rate of cleavage of the radical K. In addition, although both methods (A) and (B) provide flexibility in the choice of both the cleavable radical K and the releasable radical M in that these segments may be prepared and joined prior to reaction with the oxazalone moiety, method (B) provides additional flexibility by not requiring that these segments be capable of withstanding polymerization reaction conditions.

The polymeric 5-oxazalones utilized in reaction scheme (B) may be prepared by polymerization of the 2-alkenyl-5-oxazalones utilized in reaction scheme (A). As disclosed, for example, by Taylor, et al., J. Polym. Sci., B, vol. 9, 187 (1971), in preparing polymeric oxazalones by polymerization of 2-alkenyl-5-oxazalones, undesirable rearrangements may be minimized and a higher yield of purer, more stable polymer obtained if the substituents at the 4- position of the oxazalone ring ($R^2$ and $R^3$ herein) are other than hydrogen. Thus, with respect to reaction scheme (B), $R^2$ and $R^3$ are preferably other than hydrogen. Preferred substituents $R^2$ and $R^3$ are alkyl groups. Most preferably, each of $R^2$ and $R^3$ is methyl. Illustrative polymerization techniques are described, for example, in the Taylor et al. article referenced immediately above, by Iwakura, et al., J. Polym. Sci., A—1, vol. 6, 2681 (1968), and in previously referenced U.S. Patent no. 3,488,327 and Brit. Patent No. 1,121,418.

The 2-alkenyl-5-oxazalones can be homopolymerized or copolymerized with other ethylenically unsaturated monomers, such as those enumerated above, for purposes of imparting predetermined physical properties to the polymers ultimately formed by reaction scheme (B). Alternatively, such predetermined properties may be obtained by derivatization of the polymeric oxazalone with nucleophilic compounds which will impart thereto the desired physical properties, e.g., derivatization with an amino carboxylic acid to provide hydrophilic carboxyl groups to the polymer. The derivatization with such nucleophilic compounds can be conducted concurrently with the derivatization with $Y^1$—K—M or the respective derivatization reactions may be conducted sequentially.

Derivatization of the polymeric oxazalone in accordance with reaction scheme (B) is preferably conducted in the presence of a suitably inert and substantially anhydrous solvent such as tetrahydrofuran, benzene, toluene, dioxane, ethyl acetate, methylethylketone, chloroform, and dichloromethane. Similar to reaction scheme (A) the derivatization reaction may be facilitated by the presence of a 4-dialkylaminopyridine catalyst. The reaction may be conducted over a range of temperatures of about 0°C to about 100°C and preferably about 20°C to about 65°C.

In a typical derivatization reaction the polymeric oxazalone and nucleophilic compound are added to an appropriate solvent and stirred until reacted. The reaction mixture may be heated if necessary to dissolve either of the reagents or to increase the rate of reaction. Upon completion of the reaction, as determined, for example, by monitoring techniques such as infrared analysis or thin layer chromatography, the product may be isolated by precipitation followed by filtration.

The polymers hereof may be coated in film units from a solution or, as illustrated in Example 2 herein, in the form of a solid dispersion.

The present invention is further illustrated in the following Examples which are illustrative only and not intended to be of limiting effect.

Example I

Preparation of a polymer comprising recurring units of the formula

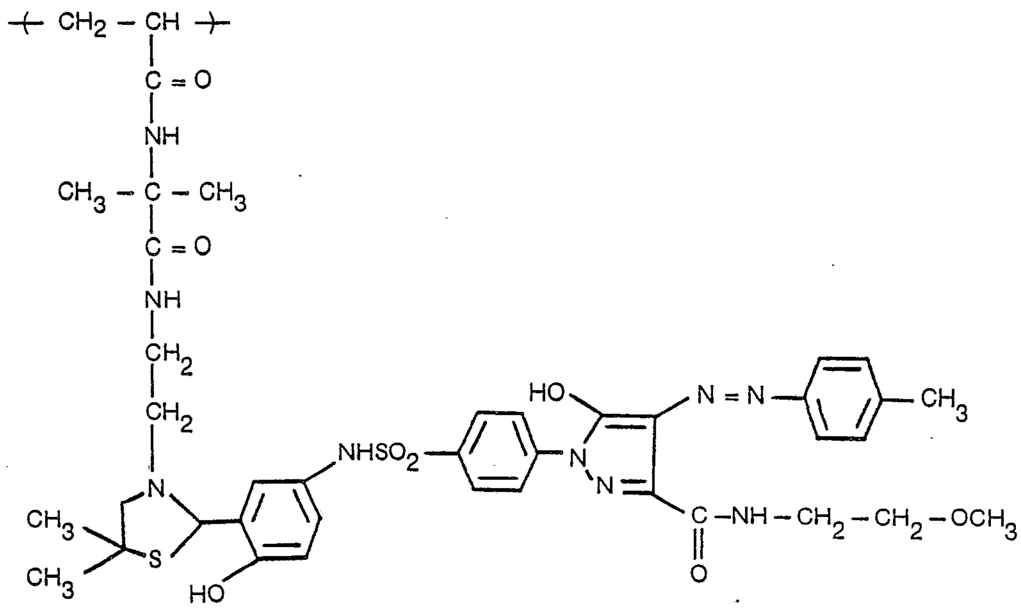

(a) 3.0 grams of a dye of the formula

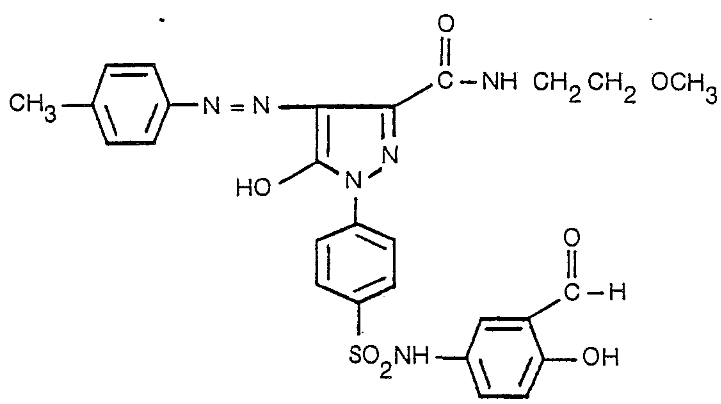

and 0.85 grams of 1,1-dimethyl-2-(2-amino) ethylaminoethane thiol of the formula

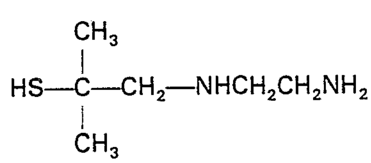

were added to 40 milliliters of tetrahydrofuran and the mixture refluxed overnight. Upon cooling, a yellow solid precipitated which was isolated by filtration and washed with a minimal amount of tetrahydrofuran. Yield of 1.0 gram of a thiozolidine dye of the formula

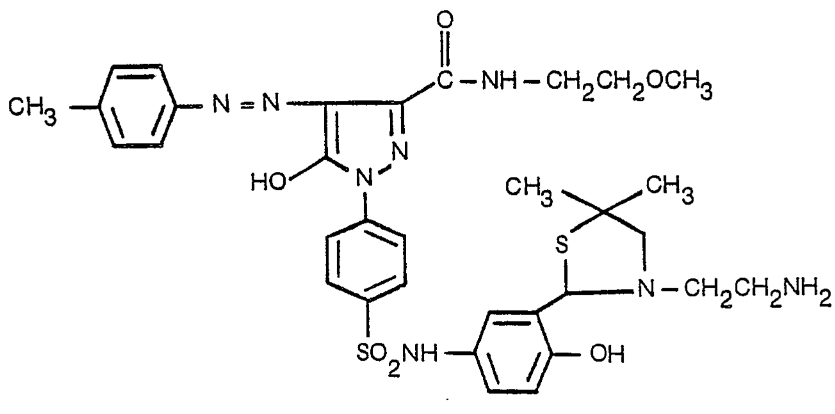

Structure was confirmed by NMR analysis. Thin layer chromatography analysis indicated that the dye was essentially pure.

(b) 1.4 Grams of the thiazolidine dye from step (a) and 0.56 grams of poly(2-vinyl-4,4-dimethyl-5-oxazalone) were added to 15 milliliters of tetrahydrofuran and the mixture refluxed for about four hours. Upon cooling, a yellow solid precipitated. The mixture was centrifuged and the supernatant tetrahydrofuran was decanted. Acetone was added to the residue to form an easily stirred slurry and stirring was continued overnight. The acetone was then decanted and the polymeric dye release material dissolved in dimethylformamide. A solid dispersion of the dye was prepared by addition of the dimethylformamide solution to water. This solid dispersion had a polymer concentration of 70 mg./ml. and was coated and evaluated as described in Example 2.

Example 2

A photosensitive element was prepared by coating a transparent polyethylene glycol terephthalate base with the following layers:

1. a layer of a mixture consisting of 5.0 grams of the polymer dispersion prepared in Example 1, 2.0 grams of a 17.5% by weight gelatin solution, 0.7 milliliters of a 1% by weight aqueous solution of dioctyl sodium succinate (available from American Cyanamid Co. under the tradename Aerosol OT), and 17.4 milliliters of water, said layer comprising about 377 milligrams per square meter of the dye-providing polymer;

2. a blue sensitive negative working silver iodobromide emulsion layer which contained 323 milligrams per square meter of silver and 506 milligrams per square meter of gelatin;

3. a gelatin layer which contained 323 milligrams per square meter of gelatin and 27 milligrams per square meter of succinaldehyde.

An image-receiving element was prepared by coating a transparent polyethylene glycol terephthalate base with the following layers:

1. as a polymeric acid layer, the partial butyl ester of polyethylene/maleic anhydride copolymer at a coverage of about 27,000 milligrams per square meter;

2. a timing layer containing about 40:1 ratio of a 60—30—4—6 polymer of butylacrylate, diacetone acrylamide, styrene, and methacrylic acid and polyvinyl alcohol at a coverage of about 5380 milligrams per square meter;

3. an image-receiving layer of a 2:1 mixture by weight, of polyvinyl alcohol and poly-4-vinylpyridine at a coverage of about 4300 milligrams per square meter.

Following a 2 meter-candle-second exposure of the aforesaid photosensitive element through a graduated neutral density step wedge, the photosensitive element and image-receiving element were superposed and an aqueous alkaline processing composition comprising:

| | |
|---|---|
| Sodium hydroxide (50% aqueous solution) | 159 gm. |
| Titanium dioxide | 750 gm. |
| Hydroxyethyl cellulose | 51 gm. |
| Tetramethyl reductic acid | 60 gm. |

| | |
|---|---|
| 6-(Methylthiomethyl)uracil | 22 gm. |
| Sodium sulfite | 30 gm. |
| Water | 1420 ml. |

was spread therebetween in a layer 0.0050 millimeters thick. The elements were retained in a superposed relationship subsequent to processing. A positive yellow image was obtained having a maximum reflection density to incident blue light of 1.50 and a minimum reflection density thereto of 0.43.

Example 3

A second film unit identical to that described in Example 2 was processed as described in that Example except that, at the completion of processing, the photosensitive and image-receiving elements were separated. The photosensitive element was washed with water to remove residual silver halide, gelatin, and other residual chemicals, to yield a high quality negative transparent image associated with the polymer layer of the photosensitive element.

**Claims**

1. A polymer comprising recurring units of the formula

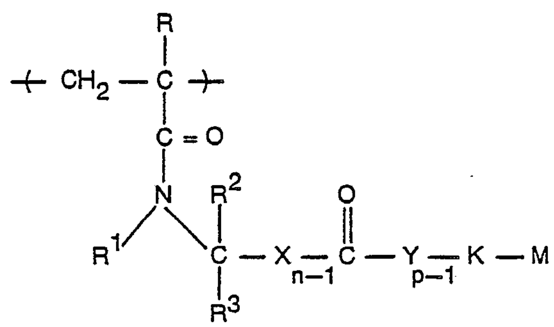

wherein R is hydrogen or lower alkyl; $R^1$ is hydrogen or lower alkyl; $R^2$ and $R^3$ are each independently hydrogen; lower alkyl; substituted lower alkyl; aryl; alkaryl; aralkyl; cycloalkyl; or $R^2$ and $R^3$ taken together with the carbon atom to which they are bonded constitute a carbocyclic or heterocyclic ring; or $R^3$ is taken together with $R^1$ to form part of a substituted or unsubstituted N-containing ring; X is alkylene having from 1 to 5 carbon atoms; Y is selected from the group consisting of —O—, —NH—, —$NR^4$— and —S— wherein $R^4$ is alkyl or aryl; K is a divalent organic radical which is capable of undergoing cleavage in the presence of silver ion or silver complex to release the radical M from said polymer or which, in the presence of an oxidizing or reducing agent, forms a reaction product capable of undergoing cleavage to release the radical M from said polymer; M is a monovalent organic radical; n is a positive integer one or two; and p is a positive integer one or two.

2. A polymer according to claim 1 wherein said radical K comprises a sulfur-nitrogen group selected from

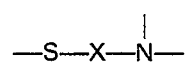 or —S—X—N=

wherein X is

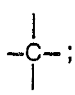 ; 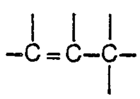 ; 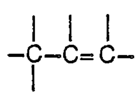 ; 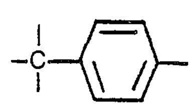 ; or 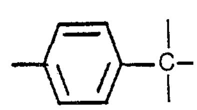 .

3. A polymer according to claim 2, wherein said sulfurnitrogen group is present in a ring system of the formula

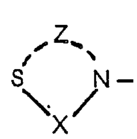

or

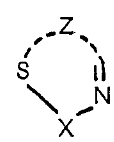

wherein Z represents the atoms necessary to complete a ring system having up to 20 members.

4. A polymer according to claim 3, wherein said ring system is a thiazolidine ring.

5. A polymer according to any preceding claim wherein said radical M, upon release from said polymer, comprises, by itself or in combination with a group substituted thereon and formed as a result of said cleavage, a photographically useful moiety.

6. A polymer according to claim 5, wherein said photographically useful moiety is a diffusible image dye-providing material.

7. A polymer according to claim 6, wherein said image dye-providing material is a diffusible dye.

8. A polymer according to claim 6, wherein said image dye-providing material is a dye intermediate.

9. A polymer according to claim 1, comprising recurring units of the formula

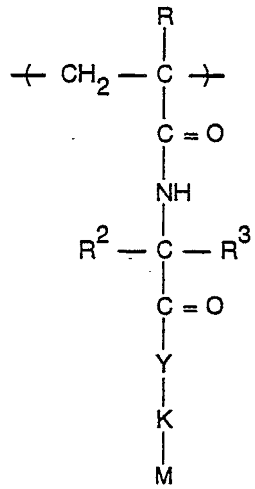

wherein R is hydrogen or lower alkyl; $R^2$ and $R^3$ are each independently hydrogen or lower alkyl; Y is —NH— or —$NR^4$— wherein $R^4$ is alkyl or aryl; K is a divalent organic radical comprising a thiazolidine ring; and M is a monovalent radical of an organic dye.

10. A process for forming an imagewise distribution of a photographically useful moiety comprising the steps of:

developing with an aqueous alkaline processing composition an exposed photosensitive silver halide emulsion layer having associated therewith a polymer according to any of claims 5 to 9

forming as a function of development of said silver halide emulsion an imagewise distribution of a cleavage-initiating agent capable of effecting cleavage of group K in said polymer to release the radical M from said polymer; and

contacting said cleavage-initiating agent with said.polymer to effect said cleavage.

11. A process according to claim 10 wherein said polymer is present in said silver halide emulsion layer or in a layer associated with said silver halide emulsion layer.

12. A process according to claim 10 or 11 wherein said cleavage-initiating agent is silver ion or soluble silver complex; an oxidizing agent such as oxidized silver halide developing agent; or a reducing agent such as a silver halide developing agent.

13. A process according to any of claims 10 to 12 wherein said photographically useful moiety is a diffusible image dye-providing material.

14. A process according to claim 13 further comprising transferring at least a portion of said image dye-providing materials to an image-receiving layer in superposed relationship with said silver halide emulsion layer to form a color transfer image therein.

15. A process according to claim 10 for forming an imagewise distribution of an organic dye comprising the steps of:

developing with an aqueous alkaline processing composition an exposed photosensitive silver halide emulsion layer having associated therewith a polymer according to claim 9;

forming in undeveloped areas an imagewise distribution of silver ions or soluble silver complex;

contacting said imagewise distribution of silver ions or soluble silver complex with said polymer to effect a corresponding imagewise cleavage of said thiazolidine ring; and

releasing said radical M from said polymer as a function of said cleavage.

16. A process according to claim 15 further comprising transferring at least a portion of said organic dye to an image-receiving layer in superposed relationship with said silver halide emulsion layer to form a color transfer image therein.

17. A photosensitive element comprising a support layer carrying at least one photosensitive silver halide emulsion layer characterised by having associated with said emulsion layer a polymer according to any of claims 5 to 9.

18. A photosensitive element according to claim 17 comprising a support carrying at least one photosensitive silver halide emulsion layer having associated therewith a polymer according to claim 9.

19. A photosensitive element according to claim 17 or 18 including an image-receiving layer on the same side of said support as said emulsion layer and associated polymer.

**Revendications**

1. Polymère comprenant des motifs de récurrence de formule:

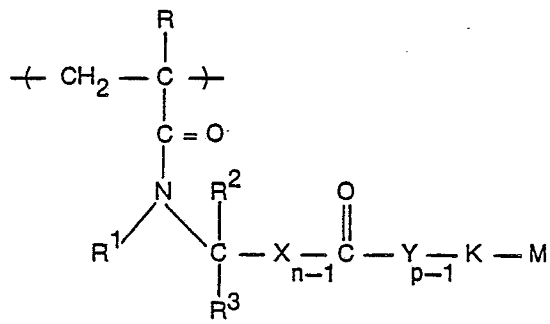

dans laquelle R est l'hydrogène ou un alkyle inférieur; $R^1$ est l'hydrogène ou un alkyle inférieur, $R^2$ et $R^3$ sont chacun indépendamment l'un de l'autre l'hydrogène, un alkyle inférieur; un alkyle inférieur substitué; un aryle; un alkaryle; un aralkyle; un cycloalkyle; ou $R^2$ et $R^3$ considérés en association avec l'atome de carbone auquel ils sont liés constituent un noyau carbocyclique ou hétérocyclique; ou $R^3$ est associé à $R^1$ pour former une partie d'un noyau azoté substitué ou non substitué; X est un alkylène ayant de 1 à 5 atomes de carbone; Y est choisi parmi —O—, —NH—, —$NR^4$— et —S—, où $R^4$ est un alkyle ou aryle; K est un radical organique divalent capable de subir un clivage en présence d'ions argent ou d'un complexe d'argent, en provoquant la séparation du radical M dudit polymère ou qui, en présence d'un agent oxydant ou réducteur, donne un produit de réaction capable de subir un clivage provoquant la séparation du radical M dudit polymère; M est un radical organique monovalent; n est un entier positif égal à un ou deux, et p est un entier positif égal à un ou deux.

2. Polymère selon la revendication 1, dans lequel ledit radical K comprend un groupe soufre-azote choisi parmi

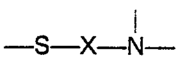 ou —S—X—N=

dans laquelle X est

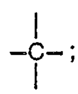 ; 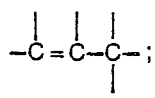 ; 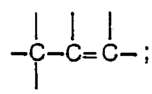 ; 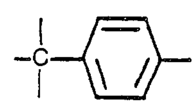 ; ou 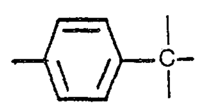 .

3. Polymère selon la revendication 2, dans lequel ledit groupe soufre-azote est présent dans un système cyclique répondant à la formule:

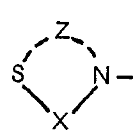 ou 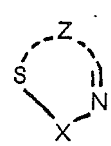

dans laquelle Z représente les atomes nécessaires pour compléter un système cyclique comportant jusqu'à 20 chaînons.

4. Polymère selon la revendication 3, dans lequel ledit système cyclique est un cycle thiazolidine.

5. Polymère selon l'une quelconque des revendications précédentes, dans lequel ledit radical M, lors de la séparation dudit polymère, constitue, par lui-même, ou lorsqu'il est associé à un groupe substitué sur celui-ci et formé par suite dudit clivage, une partie photographiquement utile.

6. Polymère selon la revendication 5, dans lequel cette partie photographiquement utile est une matière fournissant un colorant d'image diffusible.

7. Polymère selon la revendication 6, dans lequel cette matière fournissant un colorant d'image est un colorant diffusible.

8. Polymère selon la revendication 6, dans lequel cette matière fournissant un colorant d'image est un intermédiaire de colorant.

9. Polymère selon la revendication 1 comprenant des motifs de récurrence de formule:

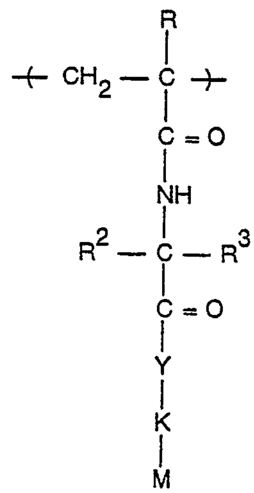

dans laquelle R est l'hydrogène ou un alkyle inférieur; $R^2$ et $R^3$ sont chacun indépendamment l'un de l'autre l'hydrogène ou alkyle inférieur; Y est —NH— ou —$NR^4$—, où $R^4$ est un alkyle ou un aryle; K est un radical organique divalent comprenant un cycle thiazolidine; et M est un radical monovalent d'un colorant organique.

10. Procédé de formation d'une répartition selon une image, d'une partie photographiquement utile, comprenant:

le développement par une composition de traitement alcaline aqueuse d'une couche d'émulsion d'halogénure d'argent photosensible exposée associée à un polymère selon l'une quelconque des revendications 5 à 9;

la formation, en fonction du développement de ledite émulsion d'halogénure d'argent, d'une répartition selon une image d'un agent d'amorçage du clivage capable de réaliser le clivage du groupe K dans ledit polymère pour séparer le radical M dudit polymère;

la mise en contact dudit agent d'amorçage du clivage avec ledit polymère pour produire ledit clivage.

11. Procédé selon la revendication 10, dans lequel ledit polymère est présent dans ladite couche d'émulsion d'halogénure d'argent ou dans une couche associée à ladite couche d'émulsion d'halogénure d'argent.

12. Procédé selon la revendication 10 ou 11, dans lequel ledit agent d'amorçage du clivage est un ion argent ou un complexe soluble de l'argent; un argent oxydant tel qu'un agent de développement d'halogénure d'argent oxydé; ou un agent réducteur tel qu'un agent de développement d'halogénure d'argent.

13. Procédé selon l'une quelconque des revendications 10 à 12, dans lequel ladite partie photographiquement utile est une matière fournissant un colorant d'image diffusible.

14. Procédé selon la revendication 13, comprenant en outre le transfert d'au moins une partie de ladite matière fournissant un colorant d'image vers une couche réceptrice de l'image superposée à ladite couche d'émulsion d'halogénure d'argent pour y former une image en couleur par transfert.

15. Procédé selon la revendication 10, pour former une répartition selon une image d'un colorant organique, comprenant:

le développement par une composition de traitement alcaline aqueuse d'une couche d'émulsion d'halogénure d'argent photosensible exposée à laquelle est associé un polymère selon la revendication 9;

la formation dans des zones non développées d'une répartition selon une image d'ions argent ou d'un complexe soluble de l'argent;

la mise en contact de ladite répartition selon une image d'ions argent ou d'un complexe soluble de l'argent avec ledit polymère pour produire un clivage correspondant selon une image dudit cycle thiazolidine; et

la séparation dudit radical M dudit polymère en fonction dudit clivage.

16. Procédé selon la revendication 15, comprenant en outre le transfert d'au moins une partie dudit colorant organique vers une couche réceptrice de l'image superposée à ladite couche d'émulsion d'halogénure d'argent pour y former une image en couleur par transfert.

17. Elément photosensible comprenant une couche de support portant au moins une couche d'émulsion d'halogénure d'argent photosensible, caractérisé en ce qu'est associé à ladite couche d'emulsion un polymère selon l'une quelconque des revendications 5 à 9.

18. Elément photosensible selon la revendication 17, comprenant un support portant au moins une couche d'émulsion d'halogénure d'argent photosensible à laquelle est associé un polymère selon la revendication 9.

19. Elément photosensible selon la revendication 17 ou 18, comprenant une couche réceptrice d'image du même côté dudit support que ladite couche d'émulsion et que le polymère associé.

**Patentansprüche**

1. Polymer, enthaltend wiederkehrende Einheiten der Formel

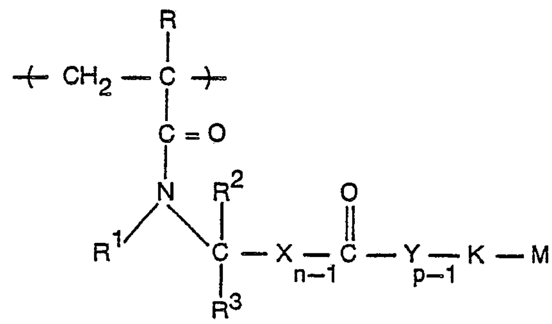

worin die Symbole folgende Bedeutungen haben:

R ist Wasserstoff oder eine niedere Alkylgruppe; $R^1$ ist Wasserstoff oder eine niedere Alkylgruppe; $R^2$ und $R^3$ sind jeweils unabhängig voneinander Wasserstoff, niedere Alkylgruppen, substuierte niedere Alkylgruppen, Arylgruppen, Alkarylgruppen, Aralkylgruppen oder Cycloalkylgruppen; oder $R^2$ und $R^3$ bilden zusammen mit dem Kohlenstoffatom, an das sie gebunden sind, einen carbocyclischen oder heterocyclischen Ring; oder $R^3$ bildet zusammen mit $R^1$ einen Teil eines substituierten oder unsubstituierten N-haltigen Ringes; X ist eine Alkylengruppe mit 1 bis 5 Kohlenstoffatomen; Y ist ausgewählt aus der Gruppe —O—, —NH—, —$NR^4$— und —S—, worin $R^4$ eine Alkyl- oder Arylgruppe ist; K ist ein zweiwertiger organischer Rest, der in Gegenwart von Silberionen oder eines Silberkomplexes unter Freisetzung des Restes M aus dem Polymer spaltbar ist oder der in Gegenwart eines Oxidations- oder Reduktionsmittels ein Reaktionsprodukt bildet, das unter Freisetzung des Restes M aus dem Polymer spaltbar ist; M ist ein einwertiger organischer Rest; n ist die positive ganze Zahl 1 oder 2; und P ist die positive ganze Zahl 1 oder 2.

2. Polymer nach Anspruch 1, worin der Rest K eine Schwefel-Stickstoff-Gruppe, ausgewählt aus

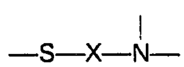 oder —S—X—N=

ist, worin X

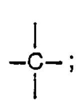 ; 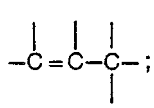 ; 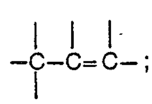 ; 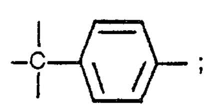 ; oder 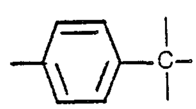

bedeutet.

3. Polymer nach Anspruch 2, worin die Schwefel-Stickstoff-Gruppe in einem Ringsystem der Formel

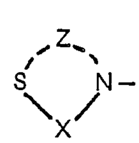 oder 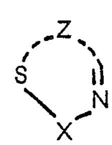

vorhanden ist, worin Z die zur Vervollständigung eines Ringsystem mit bis zu 20 Gliedern erforderlichen Atome darstellt.

4. Polymer nach Anspruch 3, worin das Ringsystem ein Thiazolidinring ist.

5. Polymer nach einem der vorhergehenden Ansprüche, worin der Rest M nach Freisetzung aus dem Polymer, als solcher oder in Kombination mit einer daran befindlichen Substituentengruppe als Ergebnis der Spaltung eine photographisch brauchbare Spezies darstellt.

6. Polymer nach Anspruch 5, worin die photographisch brauchbare Spezies ein diffundiertes bildfarbstoffliefemdes Material darstellt.

7. Polymer nach Anspruch 6, worin das bildfarbstoffliefernde Material einen diffundierbaren Farbstoff darstellt.

8. Polymer nach Anspruch 6, worin das bildfarbstoffliefernde Material ein Farbstoff-Zwischenprodukt darstellt.

9. Polymer nach Anspruch 1, enthaltend wiederkehrende Einheiten der Formel

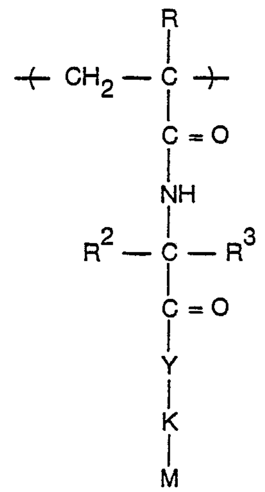

worin die Symbole folgende Bedeutungen haben:

R ist Wasserstoff oder eine niedere Alkylgruppe; $R^2$ und $R^3$ sind jeweils unabhängig voneinander Wasserstoff oder niedere Alkylgruppen; Y ist —NH— oder —$NR^4$—, worin $R^4$ eine Alkyl- oder Arylgruppe darstellt; K ist ein zweiwertiger organischer Rest, enthaltend einen Thiazolidinring; und M ist ein einwertiger Rest eines anorganischen Farbstoffs.

10. Verfahren zur Erzeugung einer bildmäßigen Verteilung einer photographisch brauchbaren Spezies, das folgende Stufen umfaßt:

Entwicklung einer belichteten lichtempfindlichen Silberhalogenid-Emulsionsschicht, der ein Polymer nach einem der Ansprüche 5 bis 9 zugeordnet ist, mit einer wäßrigalkalischen Entwicklermasse;

Erzeugung, als Funktion der Entwicklung der Silberhalogenid-Emulsion, einer bildmäßigen Verteilung eines eine Spaltung in Gang setzenden Mittels, das in der Lage ist, die Spaltung der Gruppe K im Polymer unter Freisetzung des Restes M aus dem Polymer zu bewirken; und

Zusammenbringen des die Spaltung in Gang setzenden Mittels mit dem Polymer, um die Spaltung zu bewirken.

11. Verfahren nach Anspruch 10, worin das Polymer in der Silberhalogenid-Emulsionsschicht oder in einer dieser Silberhalogenid-Emulsionsschicht zugeordneten Schicht vorhanden ist.

12. Verfahren nach Anspruch 10 oder 11, worin das die Spaltung in Gang setzende Mittel eine Silberion oder ein löslicher Silberkomplex; ein Oxidationsmittel, wie eine oxidierte Silberhalogenid-Entwicklersubstanz; oder ein Reduktionsmittel, wie eine Silberhalogenid-Entwicklersubstanz, darstellt.

13. Verfahren nach einem der Ansprüche 10 bis 12, worin die photographisch brauchbare Spezies ein diffundierbares bildfarbstoffliefemdes Material darstellt.

14. Verfahren nach Anspruch 13, bei welchem weiterhin midestens ein Teil des bildfarbstoffliefernden Materials in eine Bildempfangsschicht übertragen wird, die über der Silberhalogenid-Emulsionsschicht liegt, um darin ein farbiges Übertragungsbild zu erzeugen.

15. Verfahren nach Anspruch 10 zur Erzeugung einer bildmäßigen Verteilung eines organischen Farbstoffs, welches folgenden Stufen umfaßt:

Entwicklung einer belichteten lichtempfindlichen Silberhalogenid-Emulsionsschicht, der ein Polymer nach Anspruch 9 zugeordnet ist, mit einer wäßrig alkalischen Entwicklermasse;

Erzeugung einer bildmäßigen Verteilung von Silberionen oder löslichem Silberkomplex an unentwickelten Stellen;

Zusammenbringen der bildmäßigen Verteilung der Silberionen oder des löslichen Silberkomplexes mit dem Polymer, um eine entsprechende bildmäßige Spaltung des Thiazolidinrings zu erzeugen; und

Freisetzung des Restes M aus dem Polymer als Funktion dieser Spaltung.

16. Verfahren nach Anspruch 15, bei welchem weiterhin mindestens ein Teil des organischen Farbstoffs in eine Bildempfangsschicht übertragen wird, die sich über der Silberhalogenid-Emulsionsschicht befindet, um darin ein farbiges Übertragungsbild zu erzeugen.

17. Lichtempfindliches Element, enthaltend eine Unterlageschicht, die mindestens eine lichtempfindliche Silberhalogenid-Emulsionsschicht trägt, dadurch gekennzeichnet, daß der Emulsionsschicht ein Polymer nach einem der Ansprüche 5 bis 9 zugeordnet ist.

18. Lichtempfindliches Element nach Anspruch 17, enthaltend eine Unterlage mit mindestens einer lichtempfindlichen Silberhalogenid-Emulsionsschicht, der ein Polymer nach Anspruch 9 zugeordnet ist.

19. Lichtempfindliches Element nach Anspruch 17 oder 18, enthaltend eine Bildempfangsschicht auf derselben Seite der Unterlage wie die Emulsionsschicht und das zugeordnete Polymer.

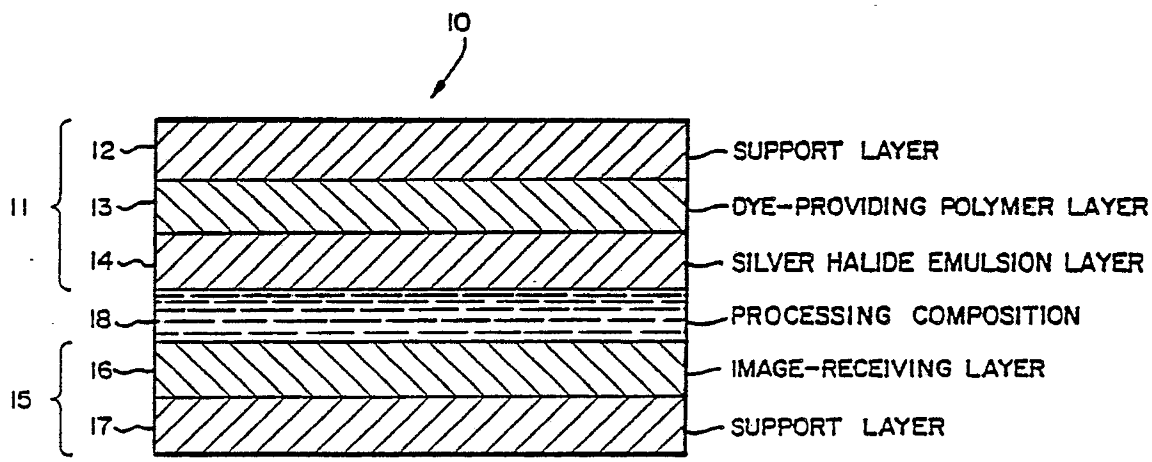
10
11
12
13
14
18
15
16
17
SUPPORT LAYER
DYE-PROVIDING POLYMER LAYER
SILVER HALIDE EMULSION LAYER
PROCESSING COMPOSITION
IMAGE-RECEIVING LAYER
SUPPORT LAYER

FIG. 1